(19) Europäisches Patentamt
European Patent Office
Office européen des brevets

(11) EP 4 039 616 A1

(12) EUROPEAN PATENT APPLICATION
published in accordance with Art. 153(4) EPC

(43) Date of publication:
**10.08.2022 Bulletin 2022/32**

(21) Application number: **20872298.3**

(22) Date of filing: **03.09.2020**

(51) International Patent Classification (IPC):
***B65D 85/88*** (2006.01) ***B65D 81/38*** (2006.01)
***B65D 85/86*** (2006.01) ***C08J 9/18*** (2006.01)

(52) Cooperative Patent Classification (CPC):
**B65D 81/38; C08J 9/18**

(86) International application number:
**PCT/JP2020/033498**

(87) International publication number:
**WO 2021/065330 (08.04.2021 Gazette 2021/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.09.2019 JP 2019180353**

(71) Applicant: **Asahi Kasei Kabushiki Kaisha**
**Tokyo 1000006 (JP)**

(72) Inventor: **KASAI Tatsuaki**
**Tokyo 100-0006 (JP)**

(74) Representative: **D Young & Co LLP**
**120 Holborn**
**London EC1N 2DY (GB)**

(54) **CONTAINER, ACCOMMODATION DEVICE, AND ELECTRICAL COMPONENT ACCOMMODATION BODY**

(57) Provided are a container that comprises a thermoplastic resin or a thermosetting resin as a constituent material and that is used for accommodating an electrical component with an accommodation ratio v of 60% or more as expressed by equation (A), an accommodation device that comprises this container and a cooling device contained in the container and/or a heating device contained in the container, and an electrical component-accommodating body that comprises this container or accommodation device and an electrical component contained in the container.

FIG. 1A

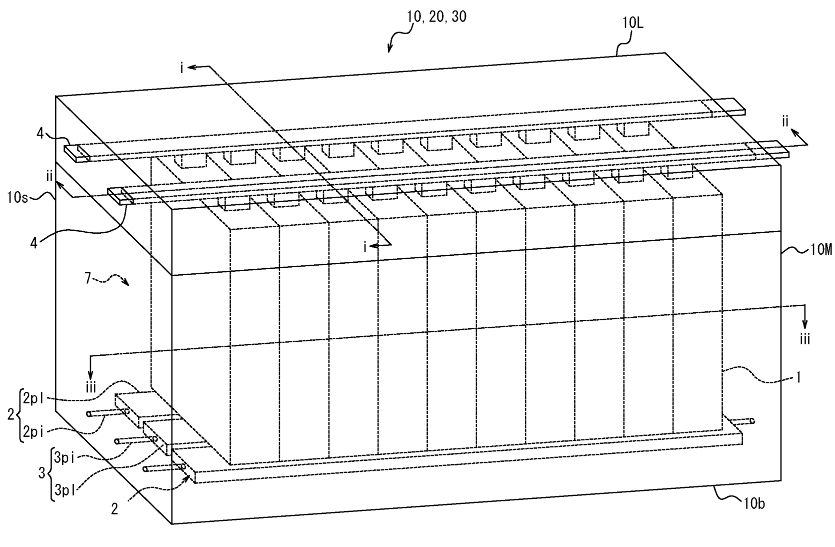




Processed by Luminess, 75001 PARIS (FR)

## Description

TECHNICAL FIELD

The present disclosure relates to a container, an accommodation device, and an electrical component-accommodating body.

BACKGROUND

Hybrid vehicles and electric vehicles have been attracting attention in recent years from a viewpoint of environmental protection. The performance of such vehicles is largely influenced by the performance of products such as secondary batteries and peripheral electrical components of these secondary batteries. Increased demand for lithium ion batteries that are designed for vehicles has been accompanied by the need to improve products in terms of operation efficiency, lifetime, and so forth.

Various metal containers, resin containers, and the like are known as containers that can accommodate electrical components. In addition to simply having a function of accommodating electrical components, containers used in this field also need to display different functions to those required of ordinary containers, such as light weight.

CITATION LIST

Patent Literature

PTL 1: JP6001323B2

SUMMARY

(Technical Problem)

However, there is still room for improvement in practical use of conventional containers used to accommodate electrical components such as described above.

Accordingly, the present disclosure is made in light of the problem set forth above and an objective thereof is to provide a container that is for accommodating an electrical component and that has light weight and low likelihood of condensation occurring.

(Solution to Problem)

As a result of diligent investigation, the inventor found that in a situation in which a lithium ion battery and peripheral electrical components thereof are accommodated inside the same container, condensation may occur inside the container and a short may occur in an electrical component during practical use because the air temperature inside the container during operation is comparatively high but can drop to the same temperature as external air when operation is stopped and also because the external air temperature can vary significantly depending on the region and time of use.

Primary features of the present disclosure are as follows.

[1] A thermally insulating container comprising a thermoplastic resin or a thermosetting resin as a constituent material and used for accommodating an electrical component with an accommodation ratio v of 60% or more as expressed by equation (A), shown below,

$$v = (Vf/Ve) \times 100 \qquad (A)$$

where, in equation (A), Ve represents volume of internal space of the container in units of $cm^3$ and Vf represents volume of accommodated matter that includes the electrical component in units of $cm^3$.

[2] An accommodation device comprising: the container according to [1]; and either or both of a cooling device contained in the container and a heating device contained in the container.

[3] The container according to [1] or the accommodation device according to [2], wherein the constituent material of the container includes a foam that contains the thermosetting resin or the thermoplastic resin.

[4] The accommodation device according to [1] or [2], wherein the foam is formed of foam beads.

[5] The container according to [1] or the accommodation device according to [2], wherein the container has a heat

deflection temperature of 60°C or higher as measured in accordance with ISO 75-1 and 75-2.
[6] The container according to [1] or the accommodation device according to [2], wherein the container has a flame retardance of V-2 or higher as measured by a 20 mm vertical flame test in accordance with a vertical method of UL-94.
[7] The accommodation device according to [2], wherein

the cooling device is directly in contact with the container, and
the heating device is directly in contact with the container.

[8] An electrical component-accommodating body comprising: the container according to [1] or the accommodation device according to [2]; and the electrical component that is contained in the container.
[9] An electrical component-accommodating body comprising: the accommodation device according to [7]; and the electrical component that is contained in the container, wherein

the cooling device is directly in contact with the electrical component and the container, and
the heating device is directly in contact with the electrical component and the container.

[10] The electrical component-accommodating body according to [8] or [9], wherein a non-covered section of the electrical component is directly in contact with the container.

(Advantageous Effect)

According to the present disclosure, it is possible to provide a container that is for accommodating an electrical component and that has light weight and low likelihood of condensation occurring.

BRIEF DESCRIPTION OF THE DRAWINGS

In the accompanying drawings:

FIG. 1A is a perspective view illustrating an electrical component-accommodating body according to an embodiment of the present disclosure that includes a container according to the present embodiment;
FIG. 1B includes a cross-sectional view (upper-left diagram) for when the electrical component-accommodating body according to the embodiment of the present disclosure is sectioned at a plane along a line i-i in FIG. 1A, a cross-sectional view (upper-right diagram) for when the electrical component-accommodating body according to the embodiment of the present disclosure is sectioned at a plane along a line ii-ii in FIG. 1A, and a cross-sectional view (lower-right diagram) for when the electrical component-accommodating body according to the embodiment of the present disclosure is sectioned at a plane along a line iii-iii in FIG. 1A;
FIG. 2A is a perspective view illustrating a container according to Example 1 of the present disclosure;
FIG. 2B includes a cross-sectional view (upper-left diagram) for when the container according to Example 1 of the present disclosure is sectioned at a plane along a line i-i in FIG. 2A, a cross-sectional view (upper-right diagram) for when the container according to Example 1 of the present disclosure is sectioned at a plane along a line ii-ii in FIG. 1A, and a cross-sectional view (lower-right diagram) for when the container according to Example 1 of the present disclosure is sectioned at a plane along a line iii-iii in FIG. 1A;
FIG. 3A is a perspective view illustrating an electrical component that is accommodated in the container according to Example 1 of the present disclosure;
FIG. 3B includes a top view (upper-left diagram) for when the electrical component accommodated in the container according to Example 1 of the present disclosure is viewed from a direction z illustrated in FIG. 3A, a side view (lower-right diagram) for when the electrical component accommodated in the container according to Example 1 of the present disclosure is viewed from a direction y illustrated in FIG. 3A, and a front view (lower-left diagram) for when the electrical component accommodated in the container according to Example 1 of the present disclosure is viewed from a direction x illustrated in FIG. 3A;
FIG. 4A is a perspective view illustrating a cooling device accommodated in the container according to Example 1 of the present disclosure;
FIG. 4B includes a front view (upper-left diagram) for when the cooling device accommodated in the container according to Example 1 of the present disclosure is viewed from a direction x illustrated in FIG. 4A, a side view (upper-right diagram) for when the cooling device accommodated in the container according to Example 1 of the present disclosure is viewed from a direction y illustrated in FIG. 4A, and a top view (lower-right diagram) for when the cooling device accommodated in the container according to Example 1 of the present disclosure is viewed from a direction z illustrated in FIG. 4A;

FIG. 5 includes a diagram (upper diagram) illustrating a surface side of a main body of the cooling device illustrated in FIG. 4A and FIG. 4B and an enlarged cross-sectional view (lower diagram) for when the main body of the cooling device illustrated in FIG. 4A and FIG. 4B is sectioned at a plane along a line i-i in FIG. 4A;

FIG. 6 is a perspective view illustrating accommodated matter that is accommodated in the container according to Example 1 of the present disclosure;

FIG. 7 is a perspective view illustrating an electrical component-accommodating body according to Example 1 of the present disclosure;

FIG. 8A is a perspective view illustrating a lid of the container according to Example 1 of the present disclosure;

FIG. 8B includes a top view (upper-left diagram) for when the lid of the container according to Example 1 of the present disclosure is viewed from a direction z illustrated in FIG. 8A, a side view (lower-right diagram) for when the lid of the container according to Example 1 of the present disclosure is viewed from a direction y illustrated in FIG. 8A, and a front view (lower-left diagram) for when the lid of the container according to Example 1 of the present disclosure is viewed from a direction z illustrated in FIG. 8A;

FIG. 8C includes a cross-sectional view (left diagram) for when the lid of the container according to Example 1 of the present disclosure is sectioned at a plane along a line i-i in FIG. 8B, a cross-sectional view (center diagram) for when the lid of the container according to Example 1 of the present disclosure is sectioned at a plane along a line ii-ii in FIG. 8B, and a cross-sectional view (right diagram) for when the lid of the container according to Example 1 of the present disclosure is sectioned at a plane along a line iii-iii in FIG. 8B;

FIG. 9A is a perspective view illustrating a side section of the container according to Example 1 of the present disclosure;

FIG. 9B includes a top view (upper-left diagram) for when the side section of the container according to Example 1 of the present disclosure is viewed from a direction z illustrated in FIG. 9A, a side view (lower-right diagram) for when the bottom section of the container according to Example 1 of the present disclosure is viewed from a direction y illustrated in FIG. 9A, and a front view (lower-right diagram) for when the bottom section of the container according to Example 1 of the present disclosure is viewed from a direction x illustrated in FIG. 9A;

FIG. 10A is a perspective view illustrating a side section of the container according to Example 1 of the present disclosure;

FIG. 10B includes a top view (upper-left diagram) for when the side section of the container according to Example 1 of the present disclosure is viewed from a direction z illustrated in FIG. 10A, a side view (lower-right diagram) for when the bottom section of the container according to Example 1 of the present disclosure is viewed from a direction y illustrated in FIG. 10A, and a front view (lower-left diagram) for when the bottom section of the container according to Example 1 of the present disclosure is viewed from a direction x illustrated in FIG. 10A;

FIG. 11A is a perspective view illustrating a side section of the container according to Example 1 of the present disclosure;

FIG. 11B includes a top view (upper-left diagram) for when the side section of the container according to Example 1 of the present disclosure is viewed from a direction z illustrated in FIG. 11A, a side view (lower-right diagram) for when the bottom section of the container according to Example 1 of the present disclosure is viewed from a direction y illustrated in FIG. 11A, and a front view (lower-left diagram) for when the bottom section of the container according to Example 1 of the present disclosure is viewed from a direction x illustrated in FIG. 11A;

FIG. 12A is a perspective view illustrating a bottom section of the container according to Example 1 of the present disclosure;

FIG. 12B includes a top view (upper-left diagram) for when the bottom section of the container according to Example 1 of the present disclosure is viewed from a direction z illustrated in FIG. 12A, a side view (lower-right diagram) for when the bottom section of the container according to Example 1 of the present disclosure is viewed from a direction y illustrated in FIG. 12A, a front view (lower-left diagram) for when the bottom section of the container according to Example 1 of the present disclosure is viewed from a direction x illustrated in FIG. 12A, and a cross-sectional view (far lower-right diagram) for when the bottom section of the container according to Example 1 of the present disclosure is sectioned at a plane along a line i-i in FIG. 12A;

FIG. 13A is a perspective view illustrating a bottom section of the container according to Example 1 of the present disclosure;

FIG. 13B includes a top view (upper-left diagram) for when the bottom section of the container according to Example 1 of the present disclosure is viewed from a direction z illustrated in FIG. 13A, a side view (lower-right diagram) for when the bottom section of the container according to Example 1 of the present disclosure is viewed from a direction y illustrated in FIG. 13A, a front view (lower-left diagram) for when the bottom section of the container according to Example 1 of the present disclosure is viewed from a direction x illustrated in FIG. 13A, and a cross-sectional view (far lower-right diagram) for when the bottom section of the container according to Example 1 of the present disclosure is sectioned at a plane along a line i-i in FIG. 13A;

FIG. 14 illustrates piping of the cooling device accommodated in the container according to Example 1 of the present

disclosure and includes a side view (left diagram) for when the piping is viewed from a direction perpendicular to an axial direction of the piping and a front view (right diagram) for when the piping is viewed from a direction along the axial direction of the piping;

FIG. 15 illustrates piping of the cooling device accommodated in the container according to Example 1 of the present disclosure and includes a side view (left diagram) for when the piping is viewed from a direction perpendicular to an axial direction of the piping and a front view (right diagram) for when the piping is viewed from a direction along the axial direction of the piping; and

FIG. 16 illustrates a busbar that is accommodated in the container according to Example 1 of the present disclosure and includes a side view (left diagram) for when the busbar is viewed from a direction perpendicular to an axial direction of the busbar and a front view (right diagram) for when the busbar is viewed from a direction along the axial direction of the busbar.

DETAILED DESCRIPTION

The following provides a detailed and illustrative description of a container, an accommodation device, and an electrical component-accommodating body according to an embodiment of the present disclosure (hereinafter, also referred to as the "present embodiment") with reference to the drawings.

(Container, accommodation device, and electrical component-accommodating body)

The container according to the present embodiment is used for accommodating an electrical component with an accommodation ratio v that is not less than a specific proportion. The container according to the present embodiment includes a resin as a constituent material.

Moreover, the accommodation device according to the present embodiment includes the container according to the present embodiment and a cooling device that is contained in the container.

Furthermore, an electrical component-accommodating body according to the present embodiment includes the container according to the present embodiment or the accommodation device according to the present embodiment and also includes accommodated matter that is contained in the container.

FIG. 1A is a perspective view illustrating the electrical component-accommodating body according to the embodiment of the present disclosure that includes the container according to the present embodiment.

The upper-left diagram in FIG. 1B is a cross-sectional view for when the electrical component-accommodating body according to the embodiment of the present disclosure is sectioned at a plane along a line i-i in FIG. 1A, the upper-right diagram in FIG. 1B is a cross-sectional view for when the electrical component-accommodating body according to the embodiment of the present disclosure is sectioned at a plane along a line ii-ii in FIG. 1A, and the lower-right diagram in FIG. 1B is a cross-sectional view for when the electrical component-accommodating body according to the embodiment of the present disclosure is sectioned at a plane along a line iii-iii in FIG. 1A.

The container 10 according to the present embodiment may include a container body 10M that is formed of a bottom section 10b and side sections 10s and may also include a lid 10L that can fit with the container 10 as illustrated in FIG. 1A and FIG. 1B. The constituent material of the lid 10L may be similar to the constituent material of the container body 10M and may be the same as or different from the constituent material of the container 10.

In the present embodiment, the term "accommodated matter 7" refers to matter that at least partially occupies internal space of the container 10 (described further below).

In the present embodiment, the accommodated matter 7 may, in addition to an electrical component 1, include a cooling device 2, a heating device 3, a busbar 4 that can electrically connect a plurality of electrical components 1, and so forth (refer to FIG. 1A and FIG. 1B).

The shape of the container 10 may be set as appropriate depending on the objective or application without any specific limitations.

The plan view shape of the bottom section 10b may be a rectangular shape (square, oblong, etc.), a circular shape (circle, ellipse, etc.), or the like, and the corners of the rectangular shape may be rounded. In the example illustrated in FIG. 1A and FIG. 1B, the plan view shape of the bottom section 10b is an oblong shape.

The plan view shape of the side sections 10s may be a rectangular shape, a circular shape, or the like. In the example illustrated in FIG. 1A and FIG. 1B, the plan view shape of the side sections 10s is an oblong shape.

The shape of the lid 10L may be set as appropriate depending on the objective or application without any specific limitations and may be a shape that matches with the shape of the container 10.

One bottom section 10b and four side sections 10s that continue from the bottom section 10b are provided in the container 10 illustrated in FIG. 1A and FIG. 1B, and, in the electrical component-accommodating body 30 that includes the lid 10L, an outer surface and also an inner surface defining an internal space each form a cuboid shape.

Examples of the electrical component 1 include, but are not specifically limited to, a secondary battery such as

a lithium ion battery, a primary battery, a connector, a plug, a cord, a cable, a busbar, a switch, a capacitor, a coil, a socket, a wiring board, an integrated circuit, a control board, an antenna, an electric motor, a cooling device, and a heating device.

The electrical component 1 may include a covered section and may include a non-covered section. The term "non-covered section" refers to a section that includes an outer surface having electrical conductivity, such as a metal section, whereas the term "covered section" refers to a section that includes an outer surface where a section having electrical conductivity has been subjected to electrical insulation coating with a resin, paint, or the like.

In a case in which a lithium ion battery is used as the electrical component 1 in the present embodiment, it is suitable for 1 to 100 lithium ion batteries, and more suitable for 5 to 50 lithium ion batteries to be stacked in an electrically connected manner (refer to FIG. 1A and FIG. 1B).

The accommodation ratio v in the present embodiment is expressed by the following equation (A).

$$v = (Vf/Ve) \times 100 \qquad (A)$$

(In equation (A), Ve ($cm^3$) represents the volume of internal space of the container 10 and Vf ($cm^3$) represents the volume of accommodated matter 7 that includes the electrical component 1 described above.)

The internal space of the container 10 is a space that can accommodate the accommodated matter 7 of the container 10. In a case in which the container 10 includes the container body 10M and the lid 10L, the internal space of the container 10 is a space that is defined by the inner surface of the container 10. In other words, the internal space is a space that is defined by the inner surface of the container body 10M (i.e., a bottom surface that is an inner surface of the bottom section 10b and side surfaces that are inner surfaces of the side sections 10s) and the inner surface of the lid 10L.

Moreover, in a case in which the container 10 includes a structure, such as a hole, that is in communication with outside of the container 10, the innermost surface of the container 10 is taken as a basis and then the volume of a region located inward thereof is defined as the volume Ve of the internal space of the container 10.

Note that in a case in which the container 10 includes a structure, such as a hole, that is in communication with outside of the container 10, this may lead to problems such as the infiltration of air, water, oil, or the like from outside of the container 10, the escape of the accommodated matter 7 to outside of the container 10, and so forth, and thus it is preferable that the structure in communication with the outside is small, and more preferable that such a structure is not present.

It is essential that the container 10 according to the present embodiment is used with an accommodation ratio v of 60% or more.

Moreover, it is essential that the container 10 according to the present embodiment includes a thermoplastic resin or a thermosetting resin as a constituent material.

In the case of the container 10 according to the present embodiment, the constituent material of the container 10 is a thermoplastic resin or thermosetting resin having lower thermal conductivity than a metal, and thus thermal conduction between the inside and outside of the container 10 can be inhibited, and the influence that temperature changes outside of the container 10 have on inside of the container 10 can be reduced as compared to a conventional container made of metal.

Moreover, when the container 10 according to the present embodiment is used in a vehicle, a terminal of the electrical component 1 may come into direct contact with the container 10 in a situation in which a strong load acts on the container 10 due to a collision or the like, but as a result of a thermoplastic resin or a thermosetting resin being used as the constituent material, the occurrence of a short is unlikely to occur as compared to when a conventional container made of metal is used.

Furthermore, in the case of a conventional container made of metal, problems such as fluctuations of the temperature of accommodated matter and conduction of heat of the accommodated matter to peripheral members may occur as a result of heat exchange with outside of the container due to thermal conductivity of the container generally being high. For this reason, a cooling device and/or a heating device may be installed in order to reduce the temperature difference between inside and outside of the container, but increased space inside the container and increased power consumption due to operation of the cooling device or heating device may act as impediments. However, the container 10 according to the present embodiment makes it possible to alleviate these impediments.

Since the container 10 according to the present embodiment is used with a comparatively high accommodation ratio v of 60% or more as compared with a known container made of resin, the container 10 according to the present embodiment makes it possible to comparatively reduce the proportion constituted by the volume Va (described further below) of air present in the internal space of the container 10 among the volume Ve of the internal space of the container 10. This enables reduction of the amount of condensation that can occur in a situation in which the electrical component 1 is cooled while being used or a situation in which the external air temperature is low compared to inside the container 10.

The accommodation ratio v described above is preferably 70% or more, more preferably 75% or more, and even more preferably 80% or more from a viewpoint of inhibiting condensation, and is preferably less than 100%, more preferably 98% or less, and even more preferably 96% or less from a viewpoint of inhibiting deformation or damage of the container 10 caused by thermal expansion of the electrical component 1 and from a viewpoint of increasing ease of operation during loading.

The volume Va of air present in the internal space of the container 10 is preferably 1 $cm^3$ or more, and more preferably 10 $cm^3$ or more, and is preferably 10,000 $cm^3$ or less, and more preferably 5,000 $cm^3$ or less from a viewpoint of obtaining benefits such as reducing the maximum amount of condensation that can occur, reducing the size of a region where the electrical component 1 is not accommodated in the container so as to effectively utilize space, and improving ease of operation during installation or maintenance of the electrical component.

Note that the volume Va of air present in the internal space of the container 10 is expressed by the following equation (B).

$$Va = Ve - Vf \qquad (B)$$

(In equation (B), Ve ($cm^3$) and Vf ($cm^3$) have the same meaning as in the previously described equation (A).)

Moreover, the proportion constituted by the volume Va of air present in the internal space of the container 10 among the volume Ve of the internal space of the container 10 is preferably more than 0%, and more preferably 2% or more, and is preferably 40% or less, and more preferably 30% or less from a viewpoint of obtaining benefits such as reducing the maximum amount of condensation that can occur, reducing the size of a region where the electrical component is not accommodated in the container so as to effectively utilize space, and improving ease of operation during installation or maintenance of the electrical component.

In the electrical component-accommodating body 30 according to the present embodiment, the electrical component 1 and the container 10 (container body 10M and lid 10L) may be disposed with a space therebetween (refer to FIG. 1A and FIG. 1B) or may be disposed in direct contact.

In one suitable configuration, the electrical component 1 and an inner surface of the container 10 are at least partially in direct contact and, moreover, a non-covered section of the electrical component 1 and the inner surface of the container 10 are at least partially in direct contact.

As previously described, a thermoplastic resin or thermosetting resin having lower thermal conductivity than a metal is adopted as the constituent material of the container 10 in the present embodiment, and thus it is easy to obtain an effect of inhibiting a short in the direct contact configuration described above.

The cooling device 2 that can be included in the accommodation device 20 and the electrical component-accommodating body 30 according to the present embodiment may include piping 2pi (cooling medium inflow pipe and cooling medium outflow pipe) and a cooling plate 2pl (refer to FIG. 1A and FIG. 1B). Although the cooling device 2 may be a cooling device in which a gas is used as a cooling medium or a cooling device in which a liquid is used as a cooling medium, a cooling device in which a liquid is used as a cooling medium is preferable because it is easier to increase the cooling efficiency. The cooling device 2 may be used at -40°C to 50°C, and suitably at -20°C to 30°C.

In the present embodiment, the cooling device 2 and the container 10 may be disposed with a space therebetween (refer to FIG. 1A and FIG. 1B) or may be disposed in direct contact (refer to FIG. 7).

The average spacing of the cooling device 2 and the container 10 is suitably 50 mm or less, more suitably 35 mm or less, even more suitably 20 mm or less, and particularly suitably 0 mm from a viewpoint of efficiently cooling the electrical component and from a viewpoint of inhibiting condensation that can occur in proximity to the cooling device 2. In a case in which the spacing of the cooling device 2 and the bottom section 10b of the container 10 differs from the spacing of the cooling device 2 and the side sections 10s of the container 10, the spacing referred to above is taken to be the smallest of these spacings (i.e., the spacing of the cooling device 2 and the bottom section 10b of the container 10 in FIG. 1A and FIG. 1B).

In the present embodiment, the cooling device 2 and the electrical component 1 are preferably disposed in direct contact (refer to FIG. 7) from a viewpoint of increasing cooling efficiency of the electrical component 1, but may be disposed with a space therebetween (refer to FIG. 1A and FIG. 1B).

In a case in which a space is provided, the average spacing of the cooling device 2 and the electrical component 1 is suitably 40 mm or less, more suitably 10 mm or less, and even more suitably 3 mm or less from a viewpoint of inhibiting condensation that can occur in proximity to the cooling device 2, from a viewpoint of improving cooling efficiency, and from a viewpoint of preventing heat flowing into or out from peripheral members.

In one suitable configuration according to the present embodiment, the cooling device 2 is directly in contact with the electrical component 1 and the container 10. In this configuration, at least part of the surface of the cooling device 2 is directly in contact with the electrical component 1 and the container 10. This configuration makes it possible to improve the cooling efficiency of the electrical component 1 and inhibit condensation that can occur in proximity to

the cooling device 2.

Note that although the cooling device 2 is disposed between the electrical component 1 and the bottom section 10b in the example illustrated in the present specification, this is not a limitation in the present embodiment, and the cooling device 2 may be disposed between the electrical component 1 and a side section 10s or between the electrical component 1 and the lid 10L. In these cases, the spacing described above can be set in relation to the side section 10s or lid 10L.

The heating device 3 that can be included in the accommodation device 20 and the electrical component-accommodating body 30 according to the present embodiment may include piping 3pi (heating medium inflow pipe and heating medium outflow pipe) and a heating plate 3pl (refer to FIG. 1A and FIG. 1B). The heating device 3 may be a heating device that performs heating through an electrically heated wire or an infrared heater or may be a heating device that performs heating through the inflow of a high-temperature gas. The heating device 3 may preferably be used at 0°C to 80°C, and may more preferably be used at 10°C to 60°C.

In the present embodiment, the heating device 3 and the container 10 may be disposed with a space therebetween (refer to FIG. 1A and FIG. 1B) or may be disposed in direct contact (refer to FIG. 7).

The average spacing of the heating device 3 and the container 10 is suitably 50 mm or less, more suitably 35 mm or less, even more suitably 20 mm or less, and particularly suitably 0 mm from a viewpoint of making it difficult for a heating effect of the heating device 3 to spread to regions other than the desired region and from a viewpoint of improving heating efficiency. In a case in which the spacing of the heating device 3 and the bottom section 10b of the container 10 differs from the spacing of the heating device 3 and the side sections 10s of the container 10, the spacing referred to above is taken to be the smallest of these spacings (i.e., the spacing of the heating device 3 and the bottom section 10b of the container 10 in FIG. 1A and FIG. 1B).

In the present embodiment, the heating device 3 and the electrical component 1 are preferably disposed in direct contact (refer to FIG. 7) from a viewpoint of facilitating operation of the electrical component 1, but may be disposed with a space therebetween (refer to FIG. 1A and FIG. 1B).

In a case in which a space is provided, the average spacing of the heating device 3 and the electrical component 1 is suitably 40 mm or less, more suitably 10 mm or less, and even more suitably 3 mm or less from a viewpoint of facilitating operation of the electrical component 1, from a viewpoint of improving heating efficiency, and from a viewpoint of preventing heat from flowing into or out from peripheral members.

In one suitable configuration according to the present embodiment, the heating device 3 is directly in contact with the electrical component 1 and the container 10. In this configuration, at least part of the surface of the heating device 3 is directly in contact with the electrical component 1 and the container 10. This configuration enables increased efficiency of use of the heating device 3.

Note that although the heating device 3 is disposed between the electrical component 1 and the bottom section 10b in the example illustrated in the present specification, this is not a limitation in the present embodiment, and the heating device 3 may be disposed between the electrical component 1 and a side section 10s or between the electrical component 1 and the lid 10L. In these cases, the spacing described above can be set in relation to the side section 10s or lid 10L.

In the present embodiment, ribs or depressions/protrusions may be provided at the bottom surface of the container 10 in accordance with the surface shape of the cooling plate 2pl and/or the heating plate 3pl so as to increase contact of the cooling plate 2pl and/or the heating plate 3pl with the container 10.

Although two cooling devices 2 are provided and one heating device 3 is provided between the two cooling devices 2 in the example illustrated in FIG. 1A and FIG. 1B, the accommodation device 20 and the electrical component-accommodating body 30 according to the present embodiment are not limited to this configuration.

Note that in the present embodiment, the cooling device 2 and the heating device 3 may be in direct contact and also that the cooling device 2 and the heating device 3 may be replaced by a temperature adjustment device that functions as both the cooling device 2 and the heating device 3. After operation of the electrical component 1, the cooling device 2 may be heated by the heating device 3 so as to reduce the likelihood of condensation occurring in the cooling device 2 after operation of the electrical component 1 and of a fault arising in the electrical component 1. The configuration described above makes it easy to perform this heating after operation.

No specific limitations are placed on the dimensions of the container 10 according to the present embodiment. However, when the container 10 has a cuboid shape in external appearance as illustrated in FIG. 1A and FIG. 1B, it is the case from a viewpoint of achieving weight/size reduction and reducing condensation that:

the thickness of the bottom section 10b may be 1 mm to 60 mm, and is preferably 3 mm to 50 mm;
the thickness of the side sections 10s may be 1 mm to 60 mm, and is preferably 3 mm to 50 mm; and
the thickness of the lid 10L may be 1 mm to 60 mm, and is preferably 3 mm to 50 mm.

Moreover, the dimensions of the container 10 at the outer surface thereof may be 30 mm to 1,700 mm × 30

mm to 1,700 mm × 30 mm to 1,700 mm.

In a case in which a lithium ion battery (refer to FIG 3A and 3B) is used as the electrical component 1, the dimensions of one lithium ion battery may be 1 mm to 500 mm × 1 mm to 500 mm × 1 mm to 500 mm when the lithium ion battery has a cuboid shape in terms of external appearance, excluding a terminal section.

The dimensions of one cooling plate 2pl (refer to FIG. 4A, FIG. 4B, and FIG. 5) of the cooling device 2 may be 1 mm to 1,700 mm in length by 1 mm to 1,700 mm in width by 1 mm to 30 mm in thickness.

The container 10 according to the present embodiment may be a non-foam or a foam without any specific limitations so long as it includes a thermoplastic resin or a thermosetting resin.

The container 10 according to the present embodiment preferably includes a foam that contains a thermoplastic resin or a thermosetting resin, and is more preferably formed of this foam.

The inclusion of a foam in the container 10 makes it possible to reduce the density and achieve a lighter weight.

Moreover, the thermal conductivity of the container 10 tends to decrease with increasing volume of air included in the container 10. Therefore, the use of a foam makes it possible to achieve a thermal insulation effect between inside and outside of the container 10 and, particularly in a case in which the surrounding temperature (temperature outside of the container 10) is a low or high temperature, makes it easy to obtain a heat retention effect or thermal insulation effect with respect to the electrical component 1.

The heat deflection temperature (HDT) of the container according to the present embodiment is preferably 60°C or higher, more preferably 80°C or higher, and even more preferably 100°C or higher. The heat deflection temperature of the container can be altered through the type of resin and the magnitude of the expansion ratio during production. When the heat deflection temperature of the container is 60°C or higher, it is easy to obtain a container 10 having excellent heat resistance.

Note that the heat deflection temperature (HDT) can, more specifically, be measured by a method described in the EXAMPLES section.

The container described above preferably has a flame retardance of V-2 or higher, more preferably has a flame retardance of V-1 or higher, and more preferably has a flame retardance of V-0 according to standard UL-94. The flame retardance can be altered through the type of resin used in production and also through the type and content of flame retardant used with the resin. By using a container having high flame retardance, it is possible to inhibit the spread of combustion even supposing that combustion occurs as a result of a short, explosion, or the like in the electrical component 1.

Note that the flame retardance according to standard UL-94 can, more specifically, be measured by a method described in the EXAMPLES section.

The thermal conductivity of the container described above is preferably less than 0.200 W/m·K, more preferably 0.100 W/m·K or less, even more preferably 0.050 W/m·K or less, and most preferably 0.040 W/m·K or less. When the thermal conductivity is less than 0.200 W/m·K, thermal insulation performance can be displayed with a thinner thickness, thereby facilitating space-saving. Moreover, it is easier to inhibit temperature change of accommodated matter caused by thermal conduction with external air or a peripheral member. Furthermore, in a case in which the container is adjacent to or in proximity to the cooling device or heating device, this enables improvement of cooling efficiency or heating efficiency because inflow and outflow of heat of the cooling device or heating device other than that to the accommodated matter can be prevented.

Note that the thermal conductivity can, more specifically, be measured by a method described in the EXAMPLES section.

In a case in which the container includes a foam as previously described, the expansion ratio of the foam is preferably 1.5 $cm^3/g$ to 50 $cm^3/g$, more preferably 2.0 $cm^3/g$ to 30 $cm^3/g$, and even more preferably 3.0 $cm^3/g$ to 25 $cm^3/g$. The lower limit may suitably be set as 4.0 $cm^3/g$ or more or as 8.0 $cm^3/g$ or more, and the upper limit may suitably be set as 29 $cm^3/g$ or less, as 21 $cm^3/g$ or less, or as 14 $cm^3/g$ or less. When the expansion ratio is within a range of 1.5 $cm^3/g$ to 50 $cm^3/g$, it tends to be easier to maintain excellent rigidity in the foam while also taking advantage of benefits of light weight and thermal insulation. Particularly when the expansion ratio is within a range of 3.0 $cm^3/g$ or more, it is easier to more effectively achieve thermal insulation having a significant influence on an effect of improving battery efficiency. Note that the expansion ratio can, more specifically, be measured by a method described in the EXAMPLES section.

The following provides a detailed description of constituent elements of the container, accommodation device, and electrical component-accommodating body according to the present embodiment.

The foam according to the present embodiment may be a foam that is obtained through foaming of a resin composition that contains a base resin and optionally further contains additives such as a flame retardant.

The base resin may be the aforementioned thermoplastic resin or the aforementioned thermosetting resin.

Examples of thermoplastic resins that may be used include a polyphenylene ether-based resin, a polystyrene-based resin, a polyethylene-based resin, a polyamide-based resin, a polypropylene-based resin, an ABS resin, a vinyl chloride-based resin, an acrylic resin, a methyl methacrylate resin, a nylon-based resin, a fluororesin, a polycarbonate-based resin, a polyurethane resin, and a polyester-based resin, with a polyphenylene ether-based resin, a polystyrene resin, a polyethylene resin, a polyamide resin, a polypropylene resin, an acrylic resin, or a polycarbonate-based resin being preferable from a viewpoint of heat resistance, economy, and foaming properties.

The polyphenylene ether-based resin may be a polymer represented by general formula (1), shown below.

In formula (1), $R^1$, $R^2$, $R^3$, and $R^4$ each indicate, independently of one another, a hydrogen, a halogen, an alkyl group, an alkoxy group, a phenyl group, or a haloalkyl group or haloalkoxy group having at least two carbon atoms between a halogen and the benzene ring in general formula (1) and not including a tertiary α-carbon. Moreover, n in formula (1) is an integer that represents the degree of polymerization.

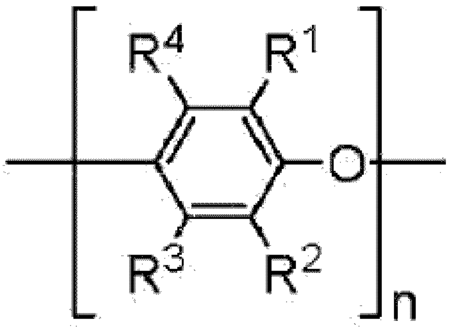

(1)

Examples of polyphenylene ether-based resins that may be used include, but are not limited to, poly(2,6-dimethyl-1,4-phenylene) ether, poly(2,6-diethyl-1,4-phenylene) ether, poly(2-methyl-6-ethyl-1,4-phenylene) ether, poly(2-methyl-6-propyl-1,4-phenylene) ether, poly(2,6-dipropyl-1,4-phenylene) ether, poly(2-ethyl-6-propyl-1,4-phenylene) ether, poly(2,6-dibutyl-1,4-phenylene) ether, poly(2,6-dilauryl-1,4-phenylene) ether, poly(2,6-diphenyl-1,4-diphenylene) ether, poly(2,6-dimethoxy-1,4-phenylene) ether, poly(2,6-diethoxy-1,4-phenylene) ether, poly(2-methoxy-6-ethoxy-1,4-phenylene) ether, poly(2-ethyl-6-stearyloxy-1,4-phenylene) ether, poly(2,6-dichloro-1,4-phenylene) ether, poly(2-methyl-6-phenyl-1,4-phenylene) ether, poly(2,6-dibenzyl-1,4-phenylene) ether, poly(2-ethoxy-1,4-phenylene) ether, poly(2-chloro-1,4-phenylene) ether, and poly(2,6-dibromo-1,4-phenylene) ether. Of these polyphenylene ether-based resins, those for which $R^1$ and $R^2$ are each an alkyl group having a carbon number of 1 to 4 and $R^3$ and $R^4$ are each a hydrogen or an alkyl group having a carbon number of 1 to 4, in particular, are preferable.

One of these polyphenylene ether-based resins may be used individually, or two or more of these polyphenylene ether-based resins may be used in combination.

The content of a polyphenylene ether (PPE) based resin in the present embodiment is preferably 20 mass% to 80 mass%, more preferably 30 mass% to 70 mass%, and even more preferably 35 mass% to 60 mass% relative to 100 mass% of the base resin. Excellent heat resistance and flame retardance are easier to obtain when the PPE content is 20 mass% or more, whereas excellent processability is easier to obtain when the PPE content is 80 mass% or less.

The weight-average molecular weight (Mw) of the polyphenylene ether-based resin is preferably 20,000 to 60,000.

Note that the weight-average molecular weight (Mw) is the weight-average molecular weight that is determined by performing measurement of the resin by gel permeation chromatography (GPC) and determining the molecular weight of a peak in the chromatogram using a calibration curve that has been determined through measurement of commercially available standard polystyrenes (i.e., prepared using peak molecular weights of the standard polystyrenes).

The polystyrene-based resin is a homopolymer of styrene or a styrene derivative or a copolymer having styrene or a styrene derivative as a main component (component contained in a proportion of 50 mass% or more in the polystyrene-based resin).

The styrene derivative may be o-methylstyrene, m-methylstyrene, p-methylstyrene, t-butylstyrene, α-methylstyrene, β-methylstyrene, diphenylethylene, chlorostyrene, bromostyrene, or the like.

Examples of polystyrene-based resins that are homopolymers include polystyrene, poly(α-methylstyrene), and polychlorostyrene.

Examples of polystyrene-based resins that are copolymers include binary copolymers such as styrene-butadiene copolymer, styrene-acrylonitrile copolymer, styrene-maleic acid copolymer, styrene-maleic anhydride copolymer, styrene-maleimide copolymer, styrene-N-phenylmaleimide copolymer, styrene-N-alkylmaleimide copolymer, styrene-N-alkyl-substituted phenylmaleimide copolymer, styrene-acrylic acid copolymer, styrene-methacrylic acid copolymer, styrene-methyl acrylate copolymer, styrene-methyl methacrylate copolymer, styrene-n-alkyl acrylate copolymer, styrene-N-alkyl methacrylate copolymer, and ethyl vinyl benzene-divinylbenzene copolymer; tertiary copolymers such as ABS and butadiene-acrylonitrile-α-methylbenzene copolymer; and graft copolymers such as styrene-grafted polyethylene,

styrene-grafted ethylene-vinyl acetate copolymer, (styrene-acrylic acid)-grafted polyethylene, and styrene-grafted polyamide.

One of these polystyrene-based resins may be used individually, or two or more of these polystyrene-based resins may be used in combination.

The content of a polystyrene-based resin in the present embodiment is preferably 10 mass% to 80 mass%, and more preferably 20 mass% to 70 mass% relative to 100 mass% of the base resin from a viewpoint of processability of the foam.

The polyethylene-based resin may be a resin of high-density polyethylene, low-density polyethylene, linear low-density polyethylene, copolymer of ethylene and an α-olefin, propylene-ethylene copolymer, or the like. These polyethylene-based resins may have a structure that is suitably cross-linked through a cross-linker or the like.

One of these polyethylene-based resins may be used individually, or two or more of these polyethylene-based resins may be used in combination.

The polyamide-based resin may be a polyamide, a polyamide copolymer, or a mixture thereof, for example. The polyamide-based resin may include a polymer obtained through self-condensation of an aminocarboxylic acid, ring-opening polymerization of a lactam, or polycondensation of a diamine and a dicarboxylic acid.

The polyamide may be nylon 66, nylon 610, nylon 612, nylon 46, nylon 1212, or the like that is obtained through polycondensation of a diamine and a dicarboxylic acid, or may be nylon 6, nylon 12, or the like that is obtained through ring-opening polymerization of a lactam.

The polyamide copolymer may be nylon 6/66, nylon 66/6, nylon 66/610, nylon 66/612, nylon 66/6T (T represents a terephthalic acid component), nylon 66/6I (I represents an isophthalic acid component), nylon 6T/6I, or the like, for example.

The mixture of any of these polymers may be a mixture of nylon 66 and nylon 6, a mixture of nylon 66 and nylon 612, a mixture of nylon 66 and nylon 610, a mixture of nylon 66 and nylon 61, a mixture of nylon 66 and nylon 6T, or the like, for example.

One of these polyamide-based resins may be used individually, or two or more of these polyamide-based resins may be used in combination.

Examples of thermosetting resins that may be used include a phenolic resin, an epoxy resin, an unsaturated polyester resin, a polyurethane, and a melamine resin, with a phenolic resin or a melamine resin being preferable.

One of these thermosetting resins may be used individually, or two or more of these thermosetting resins may be used in combination.

The content of the base resin when the resin composition is taken to be 100 mass% is suitably 20 mass% or more, more suitably 40 mass% or more, even more suitably 60 mass% or more, and particularly suitably 70 mass% or more, and is suitably 100% or less, and more suitably 95% or less.

Examples of additives that may be used include flame retardants, flame retardant synergists, heat stabilizers, antioxidants, antistatic agents, inorganic fillers, anti-dripping agents, ultraviolet absorbers, light absorbers, plasticizers, mold release agents, dyes/pigments, rubber components, and resins other than the base resin, and these additives may be added to the extent that the effects disclosed herein are not lost.

The content of additives when the base resin is taken to be 100 parts by mass is suitably 0 parts by mass (i.e., not added) to 40 parts by mass, and more suitably 5 parts by mass to 30 parts by mass.

Examples of flame retardants that may be used include organic flame retardants and inorganic flame retardants without any specific limitations.

Examples of organic flame retardants include halogenated compounds, representative examples of which are bromine compounds, and non-halogenated compounds, representative examples of which are phosphorus-based compounds and silicone-based compounds.

Examples of inorganic flame retardants include metal hydroxides, representative examples of which are aluminum hydroxide and magnesium hydroxide, and antimony-based compounds, representative examples of which are antimony trioxide and antimony pentoxide.

One of these flame retardants may be used individually, or two or more of these flame retardants may be used in combination.

Of these flame retardants, non-halogenated flame retardants that are organic flame retardants are preferable from an environmental perspective, with phosphorus-based flame retardants and silicone-based flame retardants being more preferable.

A flame retardant that includes phosphorus or a phosphorus compound can be used as a phosphorus-based flame retardant. The phosphorus may be red phosphorus. The phosphorus compound may be a phosphate ester, a phosphazene compound having a bond between a phosphorus atom and a nitrogen atom in a main chain thereof, or the like.

Examples of phosphate esters that may be used include trimethyl phosphate, triethyl phosphate, tripropyl phosphate, tributyl phosphate, tripentyl phosphate, trihexyl phosphate, tricyclohexyl phosphate, triphenyl phosphate,

tricresyl phosphate, trixylenyl phosphate, cresyl diphenyl phosphate, dicresyl phenyl phosphate, dimethyl ethyl phosphate, methyl dibutyl phosphate, ethyl dipropyl phosphate, hydroxyphenyl diphenyl phosphate, and resorcinol bis(diphenyl phosphate). Moreover, phosphate ester compounds of a type obtained through modification of any of the preceding examples with any of various substituents and various condensation-type phosphate ester compounds may be used.

Of these examples, triphenyl phosphate and condensation-type phosphate ester compounds are preferable from viewpoints of heat resistance, flame retardance, and foaming properties.

One of these phosphorus-based flame retardants may be used individually, or two or more of these phosphorus-based flame retardants may be used in combination.

The silicone-based flame retardant may be a (mono or poly)organosiloxane.

Examples of (mono or poly)organosiloxanes include monoorganosiloxanes such as dimethylsiloxane and phenylmethylsiloxane; polydimethylsiloxane and polyphenylmethylsiloxane that are obtained through polymerization of these monoorganosiloxanes; and organopolysiloxanes such as copolymers of these monoorganosiloxanes.

In the case of an organopolysiloxane, a bonding group of a main chain or branched side chain thereof may be a hydrogen, an alkyl group, or a phenyl group, and is preferably a phenyl group, a methyl group, an ethyl group, or a propyl group, but is not limited thereto. Moreover, a terminal bonding group may be a hydroxy group, an alkoxy group, an alkyl group, or a phenyl group.

The form of the silicone may be any form such as an oil form, gum form, varnish form, powder form, or pellet form without any specific limitations.

One of these silicone-based flame retardants may be used individually, or two or more of these silicone-based flame retardants may be used in combination.

The content of the flame retardant may be set within the range for content of an additive, and, when the base resin is taken to be 100 parts by mass, is suitably 0 parts by mass to 30 parts by mass, and more suitably 5 parts by mass to 25 parts by mass.

Examples of rubber components that may be used include butadiene, isoprene, 1,3-pentadiene, and the like, but are not limited thereto.

Such a rubber component is preferably a component that is dispersed in a particulate form in a continuous phase formed of a polystyrene-based resin.

The method by which any of these rubber components is added may be by adding the rubber component itself or by using a resin such as a styrene-based elastomer or a styrene-butadiene copolymer as a rubber component supply source.

In a case in which a rubber component is added, the content of the rubber component may be set within the range for the content of an additive, and, when the base resin is taken to be 100 parts by mass, is preferably 0.3 parts by mass to 15 parts by mass, more preferably 0.5 parts by mass to 8 parts by mass, and even more preferably 1 part by mass to 5 parts by mass. When the content is 0.3 parts by mass or more, it is easy to obtain a foam having excellent resin flexibility and extension, a low tendency for foam cell membranes to rupture during foaming, and excellent shaping processability and mechanical strength.

In the present embodiment, although adding more of a flame retardant to the resin composition is preferable for improving flame retardance of the container, increasing the additive amount of the flame retardant has a negative influence on foaming properties. In such a situation, a rubber component may suitably be used in order to impart foaming properties to the resin composition. In particular, the rubber component described above is important in bead foaming in which the temperature is gradually increased from normal temperature and in which a resin is foamed in a non-molten state.

In the present embodiment, it is preferable to use a resin composition containing a thermoplastic resin as a base resin in an amount of 20 mass% to 100 mass% relative to 100 mass% of the resin composition and to use a foam having an expansion ratio of 3.0 $cm^3/g$ to 25 $cm^3/g$ from a viewpoint of increasing the effects of light weight and condensation prevention disclosed herein.

Moreover, in the present embodiment, it is preferable to use a resin composition containing a polyphenylene ether-based resin as a base resin in an amount of 20 mass% to 80 mass% and a non-halogenated flame retardant that is an organic flame retardant as a flame retardant in an amount of 5 mass% to 25 mass% relative to 100 mass% of the resin composition and to use a foam having an expansion ratio of 3.0 $cm^3/g$ to 25 $cm^3/g$ from a viewpoint of easily obtaining an effect of flame retardance in addition to light weight and condensation prevention.

The production method of the foam according to the present embodiment is not specifically limited and may be extrusion foaming, bead foaming, injection foaming, or the like, for example. Of these methods, bead foaming is preferable from a viewpoint that it is easy to shape a foam of a desired shape.

In the case of extrusion foaming, the obtained foam has a sheet form and thus a punching step of cutting the foam to a desired shape and a thermal bonding step of bonding the cut-out parts are required in order to process the foam. In contrast, it is easy to shape a foam into a finer shape or a more complicated shape in the case of bead foaming because a mold of a desired shape can be produced and then foam beads (hereinafter, also referred to as "foam

particles") can be loaded into the mold and be shaped. In the case of bead foaming, it is possible for a rib shape or hook shape to be intricately combined in a single foam. This makes it possible for the foam to function not only as a container for accommodating accommodated matter but also as a retainer that fixes accommodated matter or another component in place in a screwless manner. The adoption of a screwless configuration has effects of simplifying steps and reducing the number of components, and contributes significantly to cost and weight reduction.

Although shaping of a foam with a complicated shape is also possible in the case of injection foaming, it is easier to increase the expansion ratio of the foam and to achieve both thermal insulation and the flexibility necessary for screwless fixing in the case of bead foaming.

The foam according to the present embodiment set forth above is preferably produced by bead foaming and is preferably formed of foam beads.

By performing shaping by bead foaming, it is possible to improve formability of the container 10.

A typically used gas can be used as a blowing agent without any specific limitations.

Examples of blowing agents that may be used include inorganic gases such as air, carbon dioxide gas, nitrogen gas, oxygen gas, ammonia gas, hydrogen gas, argon gas, helium gas, and neon gas; fluorocarbons such as trichlorofluoromethane (R11), dichlorodifluoromethane (R12), chlorodifluoromethane (R22), tetrachlorodifluoroethane (R112), dichlorofluoroethane (R141b), chlorodifluoroethane (R142b), difluoroethane (R152a), HFC-245fa, HFC-236ea, HFC-245ca, and HFC-225ca; saturated hydrocarbons such as propane, n-butane, i-butane, n-pentane, i-pentane, and neopentane; ethers such as dimethyl ether, diethyl ether, methyl ethyl ether, isopropyl ether, n-butyl ether, diisopropyl ether, furan, furfural, 2-methylfuran, tetrahydrofuran, and tetrahydropyran; ketones such as dimethyl ketone, methyl ethyl ketone, diethyl ketone, methyl n-propyl ketone, methyl n-butyl ketone, methyl i-butyl ketone, methyl n-amyl ketone, methyl n-hexyl ketone, ethyl n-propyl ketone, and ethyl n-butyl ketone; alcohols such as methanol, ethanol, propyl alcohol, i-propyl alcohol, butyl alcohol, i-butyl alcohol, and t-butyl alcohol; carboxylic acid esters such as formic acid methyl ester, formic acid ethyl ester, formic acid propyl ester, formic acid butyl ester, formic acid amyl ester, propionic acid methyl ester, and propionic acid ethyl ester; and chlorinated hydrocarbons such as methyl chloride and ethyl chloride.

One of these blowing agents may be used individually, or two or more of these blowing agents may be used in combination.

The blowing agent preferably displays little or no combustibility or combustion support from a viewpoint of flame retardance, and is more preferably an inorganic gas from a viewpoint of gas safety. An inorganic gas has a low tendency to dissolve in a resin compared to an organic gas such as a hydrocarbon and can easily escape from a resin after a foaming step or shaping step, which is beneficial in providing better dimensional stability over time of the foam after shaping. Moreover, in a situation in which an inorganic gas is used, this has a benefit that plasticization of a resin due to residual gas tends not to occur and that excellent heat resistance can be displayed at an earlier stage without going through a step of aging or the like. Of inorganic gases, carbon dioxide gas is preferable from viewpoint of solubility in a resin and ease of handling. Hydrocarbon-based organic gases generally have high combustibility and tend to cause poorer flame retardance when they remain in a foam.

The method by which the foam is processed into a desired shape in the present embodiment is not specifically limited and may be a method in which foam beads or a molten resin is loaded into a mold and is shaped, a method in which the foam is cut by a blade such as a saw blade or die-cutting blade, a method in which machining is performed by a mill, or a method in which a plurality of foams are adhered through heating or an adhesive.

The foam according to the present embodiment may be used individually or may be used in combination with a metal, a non-foamed resin, or the like. In such a case, objects that have each undergone shaping processing may be adhered and then used, or integral shaping may be performed and then the product thereof may be used.

In the present embodiment, a spacer (not illustrated) used for arrangement between electrical components 1 may be included in the container 10 or accommodation device 20 according to the present embodiment.

The spacer is preferably arranged such as to be directly in contact with at least part of electrical components 1 that sandwich the spacer from a viewpoint of more easily fixing the accommodated matter 7 in place and from a viewpoint of increasing thermal insulation and thereby suppressing the influence of temperature changes in the surroundings on the accommodated matter 7 and the occurrence of condensation.

The constituent material of the spacer may be similar to the constituent material of the container 10 and may be the same as or different from the constituent material of the container 10.

The spacer may be a member that is independent of the container 10 and may be configured as an electrical component accommodation kit, or the spacer may be a container part that is bonded to the container 10 and may be configured as the container 10 or accommodation device 20.

Note that although the above provides an illustrative description of an embodiment of the container, accommodation device, and electrical component-accommodating body according to the present disclosure with reference to the drawings, the embodiment described above can be altered as appropriate, and the container, accommodation device, and electrical component-accommodating body according to the present disclosure are not limited to the illustrative embodiment described above.

EXAMPLES

The following provides a more detailed description of the present disclosure through examples. However, the present disclosure is not in any way limited by the following examples.
Evaluation methods used in the examples and comparative examples are described below.

(1) Expansion ratio and density

A sample of roughly 30 mm-square and 10 mm in thickness was cut out from part of a container described in each of the subsequent examples and comparative examples. The mass W (g) of this sample was measured, a value (V/W) obtained by dividing the sample volume ($cm^3$) by the mass was taken to be the expansion ratio ($cm^3$/g), and the reciprocal thereof (W/V) was taken to be the density (g/$cm^3$).
Note that in a case in which the cutting described above was difficult, the same material as in each example or comparative example was prepared, the sample mass was measured, the volume was measured by submersion, and then these values were used to calculate the density.
Also note that in a case in which the container material was not a foam, only the density of the sample was measured.

(2) Flame retardance

Containers described in the subsequent examples and comparative examples were each subjected to a test in accordance with the UL-94 vertical method (20 mm vertical flame test) of UL standards (United States of America) so as to evaluate flame retardance (V flame retardance).
The measurement method is described in detail below.
Five test specimens of 125 mm in length, 13 mm in width, and 5 mm in thickness that had been cut out from the container were used. Each test specimen was vertically attached to a clamp, a 20 mm flame was twice applied to the test specimen for 10 seconds, and a judgment of V-0, V-1, or V-2 was made based on the burning behavior.
V-0: Flame burning time of both first and second applications is 10 seconds or less, total flame burning time and flameless burning time for second application is 30 seconds or less, total flame burning time for 5 test specimens is 50 seconds or less, no samples burn up to position of fixing clamp, and no ignition of cotton due to burning drippings
V-1: Flame burning time of both first and second applications is 30 seconds or less, total flame burning time and flameless burning time for second application is 60 seconds or less, total flame burning time for 5 test specimens is 250 seconds or less, no samples burn up to position of fixing clamp, and no ignition of cotton due to burning drippings
V-2: Flame burning time of both first and second applications is 30 seconds or less, total flame burning time and flameless burning time for second application is 60 seconds or less, total flame burning time for 5 test specimens is 250 seconds or less, and no samples burn up to position of fixing clamp, but ignition of cotton occurs due to burning drippings
Note that a judgment of "non-conforming" was made in cases that did not correspond to any of V-0, V-1, and V-2.
Moreover, a judgment of "incombustible" was made for cases in which the burning time in the test was 1 second or less.

(3) Thermal insulation

The thermal conductivity of containers described in the examples and comparative examples was measured in accordance with JIS A1412. A sample of 30 cm × 30 cm × 50 mm (thickness) was prepared and was measured by a flat plate heat flow meter method with an average temperature of 20°C. The obtained thermal conductivity (W/m·K) value was used to judge thermal insulation as follows.
Note that data in JP2018-174337A was referred to for the thermal conductivity of aluminum. Also note that in the case of a non-foamed resin (Example 13), a sample of 50 mm in diameter by 2 mm in thickness was prepared and was measured by a circular plate heat flow meter method (in accordance with ASTM E 1530) at 20°C.
Thermal insulation was judged in accordance with the following judgment standard based on the obtained thermal conductivity value.

Excellent: Thermal conductivity of less than 0.040 W/m·K
Good: Thermal conductivity of not less than 0.040 W/m·K and less than 0.100 W/m·K
Feasible: Thermal conductivity of not less than 0.100 W/m·K and less than 1.000 W/m·K
Poor: Thermal conductivity of 1.000 W/m·K or more

(4) Accommodation ratio and air volume in container after accommodation

The accommodation ratio v was defined according to the following equation (A) by taking the volume of internal space when nothing was arranged inside a container to be Ve ($cm^3$) and the volume of accommodated matter that included an electrical component to be Vf ($cm^3$).

$$v = (Vf/Ve) \times 100 \qquad (A)$$

In addition, the volume Va ($cm^3$) of air present in the internal space of the container (air volume in container after accommodation) was defined according to the following equation (B).

$$Va = Ve - Vf \qquad (B)$$

(5) Likelihood of condensation

Saturation water vapor pressures P(40) and P(10) (units: both kPa) at 40°C and 10°C, respectively, were calculated with reference to the Tetens equation described in JP2012-246792A.

Next, for a container and an electrical component-accommodating body of each example or comparative example, the maximum amount of water vapor M(40) (units: g) contained at 40°C in the volume Va of air inside the container after accommodation and the maximum amount of water vapor M(10) (units: g) contained at 10°C in the volume Va of air inside the container after accommodation were calculated according to the following calculation equations (C) and (D) by considering water vapor to obey the equation of state of an ideal gas.

In addition, the maximum amount of condensation w (units: drops) was calculated according to the following calculation equation (E), and the likelihood of condensation was judged in accordance with the following judgment standard. Note that the mass of water drops was taken to be 0.02 g per drop.

Judgment standard for condensation likelihood:

Excellent: Maximum amount of condensation w of less than 5.0 drops
Good: Maximum amount of condensation w of not less than 5.0 drops and less than 7.0 drops
Feasible: Maximum amount of condensation w of not less than 7.0 drops and less than 9.0 drops
Poor: Maximum amount of condensation w of 9.0 drops or more Calculation equations:

$$M(40) = 18 \times P(40) \times 10^3 \times Va/(10^6 \times 8.314 \times (40 + 273.15)) \qquad (C)$$

$$M(10) = 18 \times P(10) \times 10^3 \times Va/(10^6 \times 8.314 \times (10 + 273.15)) \qquad (D)$$

$$M = (M(40) - M(10))/0.02 \qquad (E)$$

(6) Condensation prevention performance

For containers of the examples and comparative examples, higher thermal insulation signifies that temperature change due to external air temperature occurs more gradually and that condensation can be inhibited, whereas a smaller maximum amount of condensation signifies that the amount of condensation that occurs due to temperature difference can be reduced. Therefore, for each container of the examples and comparative examples, a lowest evaluation among the evaluations of thermal insulation and condensation likelihood was used as an evaluation of condensation prevention performance and was judged to be "excellent", "good", "feasible", or "poor".

(7) Heat deflection temperature (HDT)

Measurement of heat deflection temperature was performed in accordance with ISO75-1 and 75-2 as described below. First, a sample of 80 mm (length) × 13 mm (width) × 10 mm (thickness) was cut out from a container described in each example or comparative example. Next, the sample was set up in an HDT Tester Machine Test (model: 3M-2) produced by Toyo Seiki Seisaku-Sho, Ltd. with a distance between fulcrums of 64 mm. A pressing jig was set up with

respect to a central section of the set-up sample, and this setup was immersed in an oil bath in a state in which a pressure of 0.45 MPa was applied. The temperature was subsequently increased at a rate of 120°C/hr, and the sample temperature at a point at which the pressing jig moved to a bending threshold of 0.34 mm was taken to be the heat deflection temperature (°C).

(Example 1)

After adding together 60 mass% of S201A (produced by Asahi Kasei Corporation) as a polyphenylene ether-based resin (PPE), 15 mass% of bisphenol A bis(diphenyl phosphate) (BBP) as a non-halogenated flame retardant, 10 mass% of high impact polystyrene resin (HIPS) having a rubber concentration of 6 mass%, and 15 mass% of GP685 (produced by PS Japan Corporation) as a general purpose polystyrene resin (PS), these materials were subjected to hot melt-kneading in an extruder and were subsequently extruded so as to produce base resin pellets.

In accordance with a method described in Example 1 of JP-H4-372630A, the base resin pellets were loaded into a pressure-resistant vessel, gas inside the vessel was purged with dry air, carbon dioxide (gas) was subsequently injected as a blowing agent, the base resin pellets were impregnated with carbon dioxide for 3 hours under conditions of a pressure of 3.0 MPa and a temperature of 10°C, and then the base resin pellets were removed from the pressure-resistant vessel and were transferred to a foaming furnace where they were subjected to foaming through steam pressurized to a maximum of 330 kPa·G while rotating an impeller at 77 rpm so as to obtain foam particles.

At this point, the residual concentration of aliphatic hydrocarbon-based gas in the foam particles was measured straight after foaming but was below the limit of detection (50 ppm). Thereafter, the foam particles were loaded into a vessel and were subjected to pressurization treatment by introducing pressurized air into the vessel (pressure increased to 0.4 MPa over 4 hours and then held at 0.4 MPa for 16 hours).

The resultant foam particles were loaded into a mold for in-mold shaping including steam holes after a subsequently described cooling device had been arranged and were then heated by pressurized steam so as to cause expansion and fusion of the foam particles to one another. Thereafter, cooling was performed, and the resultant product was removed from the shaping mold to obtain a foam container that was formed of foam particles and had a shape illustrated in FIG. 2.

In Example 1, secondary processing or the like was not particularly necessary in order to obtain the shape illustrated in FIG., and shapeability was good. Moreover, it was found to be possible to perform shaping by integral molding (in-mold shaping) for a cooling device (refer to FIG. 4A) and a shaped product having a shape corresponding to side sections (refer to FIGS. 9A to 11B) and a bottom section (refer to FIG. 12A and FIG. 12B).

FIG. 2A is a perspective view illustrating the container according to Example 1 of the present disclosure.

The upper-left diagram in FIG. 2B is a cross-sectional view for when the container according to Example 1 of the present disclosure is sectioned at a plane along a line i-i in FIG. 2A, the upper-right diagram in FIG. 2B is a cross-sectional view for when the container according to Example 1 of the present disclosure is sectioned at a plane along a line ii-ii in FIG. 1A, and the lower-right diagram in FIG. 2B is a cross-sectional view for when the container according to Example 1 of the present disclosure is sectioned at a plane along a line iii-iii in FIG. 1A.

Next, it was decided that a replica of an electrical component would be used in Example 1 for experimental convenience, and thus an aluminum machined product that was a replica of a lithium ion battery (LiB) cell having a shape illustrated in FIG. 3A and 3B was prepared.
FIG. 3A is a perspective view illustrating an electrical component that is accommodated in the container according to Example 1 of the present disclosure.

The upper-left diagram in FIG. 3B is a top view for when the electrical component accommodated in the container according to Example 1 of the present disclosure is viewed from a direction z illustrated in FIG. 3A, the lower-right diagram in FIG. 3B is a side view for when the electrical component accommodated in the container according to Example 1 of the present disclosure is viewed from a direction y illustrated in FIG. 3A, and the lower-left diagram in FIG. 3B is a front view for when the electrical component accommodated in the container according to Example 1 of the present disclosure is viewed from a direction x illustrated in FIG. 3A.

In addition, a cooling plate and piping for water cooling that were made of aluminum and had shapes illustrated in FIG. 4A, FIG. 4B, FIG. 5A, and FIG. 5B were prepared.
FIG. 4A is a perspective view illustrating a cooling device that is accommodated in the container according to Example 1 of the present disclosure.

The upper-left diagram in FIG. 4B is a front view for when the cooling device accommodated in the container according to Example 1 of the present disclosure is viewed from a direction x illustrated in FIG. 4A, the upper-right diagram in FIG. 4B is a side view for when the cooling device accommodated in the container according to Example 1 of the present disclosure is viewed from a direction y illustrated in FIG. 4A, and the lower-right diagram in FIG. 4B is a top view for when the cooling device accommodated in the container according to Example 1 of the present disclosure is viewed from a direction z illustrated in FIG. 4A.

The upper diagram in FIG. 5 illustrates a surface side of a main body of the cooling device illustrated in FIG. 4A and FIG. 4B. The lower diagram in FIG. 5 is an enlarged cross-section view for when the main body of the cooling device illustrated in FIG. 4A and FIG. 4B is sectioned at a plane along a line i-i in FIG. 4A.

Note that the cooling device had a configuration that enabled it to function as a heating device by heating a heating medium and setting a higher temperature than the temperature of accommodated matter.

A plurality of LiB cells were arranged in parallel on cooling plates as illustrated in FIG. 6, and busbars made of copper were also provided in order to connect positive electrodes and negative electrodes of the cells.
FIG. 6 is a perspective view illustrating accommodated matter that is accommodated in the container according to Example 1 of the present disclosure.

Finally, the LiB cells, cooling plates, busbars, and so forth were accommodated in the container as illustrated in FIG. 7 to thereby produce an electrical component-accommodating body.

FIG. 7 is a perspective view illustrating the electrical component-accommodating body according to Example 1 of the present disclosure.

In the electrical component-accommodating body according to Example 1, there was direct contact between the busbars and the container, between the cooling plates and the LiB cells, and between the cooling plates and the container.

With respect to the container accommodating electrical components that was obtained through the procedure described above, adjustment of the volume Va of air inside the container after accommodation was performed through adjustment of the number of LiB cells or the like. The results of evaluations performed by the previously described evaluation methods are shown in Table 1.

Note that in FIGS. 2 to 7, elements that are similar to those in the electrical component-accommodating body according to the embodiment of the present disclosure that includes the container according to the present embodiment illustrated in FIG. 1 are allotted the same reference signs.

Moreover, numbers indicating dimensions in FIGS. 2 to 7 are in units of millimeters (mm).

FIGS. 8 to 16 illustrate detailed structure of each part of the electrical component-accommodating body according to Example 1 of the present disclosure that includes the container according to Example 1 illustrated in FIGS. 2 to 7.

Note that in FIGS. 8 to 16, "R" indicates the radius of curvature at a location indicated by an arrow, whereas "Ø" indicates the diameter at a location indicated by an arrow. Moreover, numbers indicating dimensions in FIGS. 8 to 16 are in units of millimeters (mm).

FIG. 8A is a perspective view illustrating a lid of the container according to Example 1 of the present disclosure.

The upper-left diagram in FIG. 8B is a top view for when the lid of the container according to Example 1 of the present disclosure is viewed from a direction z illustrated in FIG. 8A. The lower-right diagram in FIG. 8B is a side view for when the lid of the container according to Example 1 of the present disclosure is viewed from a direction y illustrated in FIG. 8A. The lower-left diagram in FIG. 8B is a front view for when the lid of the container according to Example 1 of the present disclosure is viewed from a direction z illustrated in FIG. 8A.

The left diagram in FIG. 8C is a cross-sectional view for when the lid of the container according to Example 1 of the present disclosure is sectioned at a plane along a line i-i in FIG. 8B. The center diagram in FIG. 8C is a cross-sectional view for when the lid of the container according to Example 1 of the present disclosure is sectioned at a plane along a line ii-ii in FIG. 8B. The right diagram in FIG. 8C is a cross-sectional view for when the lid of the container according to Example 1 of the present disclosure is sectioned at a plane along a line iii-iii in FIG. 8B.

FIG. 9A is a perspective view illustrating a side section of the container according to Example 1 of the present disclosure.

The upper-left diagram in FIG. 9B is a top view for when the side section of the container according to Example 1 of the present disclosure is viewed from a direction z illustrated in FIG. 9A. The lower-right diagram in FIG. 9B is a side view for when a bottom section of the container according to Example 1 of the present disclosure is viewed from a direction y illustrated in FIG. 9A. The lower-right diagram in FIG. 9B is a front view for when the bottom section of the container according to Example 1 of the present disclosure is viewed from a direction x illustrated in FIG. 9A.

The side section illustrated in FIGS. 9A and 9B is a side section disposed at a front side of the container.

FIG. 10A is a perspective view illustrating a side section of the container according to Example 1 of the present disclosure.

The upper-left diagram in FIG. 10B is a top view for when the side section of the container according to Example 1 of the present disclosure is viewed from a direction z illustrated in FIG. 10A. The lower-right diagram in FIG. 10B is a side view for when the bottom section of the container according to Example 1 of the present disclosure is viewed from a direction y illustrated in FIG. 10A. The lower-left diagram in FIG. 10B is a front view for when the bottom section of the container according to Example 1 of the present disclosure is viewed from a direction x illustrated in FIG. 10A.

The side section illustrated in FIGS. 10A and 10B is a side section disposed at both left and right sides of the container.

FIG. 11A is a perspective view illustrating a side section of the container according to Example 1 of the present

disclosure.

The upper-left diagram in FIG. 11B is a top view for when the side section of the container according to Example 1 of the present disclosure is viewed from a direction z illustrated in FIG. 11A. The lower-right diagram in FIG. 11B is a side view for when the bottom section of the container according to Example 1 of the present disclosure is viewed from a direction y illustrated in FIG. 11A. The lower-left diagram in FIG. 11B is a front view for when the bottom section of the container according to Example 1 of the present disclosure is viewed from a direction x illustrated in FIG. 11A.

The side section illustrated in FIGS. 11A and 11B is a side section disposed at a rear side of the container.

The bottom section of the container according to Example 1 is a section that is obtained when one part of the bottom section illustrated in FIG. 12A that is for mounting the LiB cells and one part of the bottom section illustrated in FIG. 13A that is for arrangement of two cooling plates in depressions are combined in this order (refer to FIG. 2A).

FIG. 12A is a perspective view illustrating the bottom section of the container according to Example 1 of the present disclosure.

The upper-left diagram in FIG. 12B is a top view for when the bottom section of the container according to Example 1 of the present disclosure is viewed from a direction z illustrated in FIG. 12A. The lower-right diagram in FIG. 12B is a side view for when the bottom section of the container according to Example 1 of the present disclosure is viewed from a direction y illustrated in FIG. 12A. The lower-left diagram in FIG. 12B is a front view for when the bottom section of the container according to Example 1 of the present disclosure is viewed from a direction x illustrated in FIG. 12A. The far lower-right diagram is a cross-sectional view for when the bottom section of the container according to Example 1 of the present disclosure is sectioned at a plane along a line i-i in FIG. 12A.

FIG. 13A is a perspective view illustrating the bottom section of the container according to Example 1 of the present disclosure.

The upper-left diagram in FIG. 13B is a top view for when the bottom section of the container according to Example 1 of the present disclosure is viewed from a direction z illustrated in FIG. 13A. The lower-right diagram in FIG. 13B is a side view for when the bottom section of the container according to Example 1 of the present disclosure is viewed from a direction y illustrated in FIG. 13A. The lower-left diagram in FIG. 13B is a front view for when the bottom section of the container according to Example 1 of the present disclosure is viewed from a direction x illustrated in FIG. 13A. The far lower-right diagram is a cross-sectional view for when the bottom section of the container according to Example 1 of the present disclosure is sectioned at a plane along a line i-i in FIG. 13A.

FIG. 14 illustrates piping of the cooling device accommodated in the container according to Example 1 of the present disclosure. The left diagram in FIG. 14 is a side view for when the piping is viewed from a direction perpendicular to an axial direction of the piping, and the right diagram in FIG. 14 is a front view for when the piping is viewed from a direction along the axial direction of the piping.

The piping illustrated in FIG. 14 passes through the lid 10L illustrated in FIGS. 8A to 8C at one end and circumscribes and links piping illustrated in FIG. 15 at the other end.

FIG. 15 illustrates piping of the cooling device accommodated in the container according to Example 1 of the present disclosure. The left diagram in FIG. 15 is a side view for when the piping is viewed from a direction perpendicular to an axial direction of the piping, and the right diagram in FIG. 15 is a front view for when the piping is viewed from a direction along the axial direction of the piping.

The piping illustrated in FIG. 15 passes through the bottom section 10b illustrated in FIG. 12A and FIG. 12B at one end and inscribes and links the piping illustrated in FIG. 14 at the other end.

FIG. 16 illustrates a busbar accommodated in the container according to Example 1 of the present disclosure. The left diagram in FIG. 16 is a side view for when the busbar is viewed from a direction perpendicular to an axial direction of the busbar, and the right diagram in FIG. 16 is a front view for when the busbar is viewed from a direction along the axial direction of the busbar.

(Examples 2 to 5 and Comparative Example 3)

A container and an electrical component-accommodating body were produced and the previously described evaluations thereof were performed in a similar manner to in Example 1 with the exception that the accommodation ratio v was set as a condition indicated in Table 1. The results are shown in Table 1.

In each of the examples, secondary processing or the like was not particularly necessary to obtain a similar shape to the shape illustrated in FIG. 2, integral molding of a cooling device with the container was possible, and shapeability was good.

(Examples 6 and 7)

A container and an electrical component-accommodating body were produced and the previously described evaluations thereof were performed in a similar manner to in Example 1 with the exception that the pressure of pressurized

steam during production of foam particles from base resin pellets was changed to 260 kPa·G and 210 kPa·G in Examples 6 and 7, respectively. The results are shown in Table 1.

In each of the examples, secondary processing or the like was not particularly necessary to obtain a similar shape to the shape illustrated in FIG. 2, integral molding of a cooling device with the container was possible, and shapeability was good.

(Example 8)

A container and an electrical component-accommodating body were produced and the previously described evaluations thereof were performed in a similar manner to in Example 1 with the exception that the production step of base resin pellets was changed as described below.

Secondary processing or the like was not particularly necessary to obtain a similar shape to the shape illustrated in FIG. 2, integral molding of a cooling device with the container was possible, and shapeability was good. Base resin pellet production step:

Base resin pellets were produced by hot melt-kneading and subsequently extruding 60 mass% of a polystyrene-based resin (product name: GP685; produced by PS Japan Corporation) and 40 mass% of a polyphenylene ether-based resin (product name: S201A; produced by Asahi Kasei Corporation) in an extruder.

(Example 9)

A container and an electrical component-accommodating body were produced and the previously described evaluations thereof were performed in a similar manner to in Example 1 with the exception that the production step of base resin pellets was changed as described below and that the maximum steam pressure in the step of producing foam particles from the base resin pellets was changed to 70 kPa·G.

Base resin pellet production step:

Base resin pellets were produced by hot melt-kneading and subsequently extruding 100 mass% of a polystyrene-based resin (product name: GP685; produced by PS Japan Corporation) in an extruder.

(Examples 10 and 11)

Foam particles (tertiary foam particles) were obtained by a similar method to a method described in the examples of JP-H4-372630A. The residual concentration of aliphatic hydrocarbon-based gas in the obtained foam particles (tertiary foam particles) was measured straight after foaming but was below the limit of detection (50 ppm). The obtained foam particles were shaped to obtain a foam by a similar method to that in Example 1. Foams having expansion ratios of 15 $cm^3/g$ (Example 10) and 30 $cm^3/g$ (Example 11) were obtained. The results of evaluations for a container and an electrical component-accommodating body are shown in Table 1.

Secondary processing or the like was not particularly necessary to obtain a similar shape to the shape illustrated in FIG. 2, integral molding of a cooling device with the container was possible, and shapeability was good.

Note that in measurement of the HDT in Example 11, the sample was easily deformed, and thus the center of the sample significantly deformed at the point at which it was set up in the tester and came into contact with a bottom plate of the tester. However, a value obtained through measurement in this state is recorded in Table 1 as a reference value.

(Example 12)

A foam was produced by the following procedure with reference to JP2006-077218A.

First, low-density polyethylene (density = 922 $kg/m^3$; MI = 7.0 g/10 min) was supplied to a supply region of a screw-type extruder having a barrel internal diameter of 150 mm at a rate of 900 kg/hr together with 1.2 parts by mass of talc powder (particle diameter: 8.0 $\mu$m) as a cell nucleating agent and 0.8 parts of a gas permeation modifier (stearic acid monoglyceride) relative to 100 parts by mass of the resin. The barrel temperature of the extruder was adjusted to 190°C to 210°C, 3 parts by mass of a foaming agent composed of 100 mass% of n-butane was injected from a foaming agent injection port installed at a tip of the extruder relative to 100 parts by mass of the resin, and this foaming agent was mixed with the molten resin composition to obtain a foamable molten mixture.

The foamable molten mixture was cooled to 108°C by a cooling device installed at an outlet of the extruder, was subsequently continuously extruded and foamed in an atmosphere of normal temperature and atmospheric pressure through an orifice plate having an opening shape with an average thickness of approximately 4.0 mm and a width of approximately 226 mm, and was shaped while adjusting the take up rate of resin foam so as to obtain a sheet-shaped foam having a thickness of 52 mm, a width of 560 mm, a length of 1,000 mm, and a density of 100 $kg/m^3$. The hydrocarbon

concentration inside this resin foam was 2.4 parts by mass relative to 100 parts by mass of the constituent resin of the foam. The foam was stored in a 40°C environment for 3 months, and subsequent evaluations were performed once the hydrocarbon concentration was confirmed to be below the lower limit of detection (50 ppm).

Since the foam described in Example 12 was a sheet-shaped foam, secondary processing such as machining and adhesion was particularly necessary in order to obtain a similar shape to the shape illustrated in FIG. 2, and integral molding of a cooling device with the container was not possible.

(Example 13)

The base resin pellets described in Example 1 were used to produce a container having a similar shape to the shape illustrated in FIG. 2 through injection molding without a foaming step. The results of evaluations are shown in Table 1.

Note that in measurement of the HDT, the thickness was changed to 4 mm, and measurement was performed by a similar procedure to that in Example 1. When shaping was performed by arranging a cooling device in a mold for injection molding in advance and then performing shaping, resin infiltrated onto a cooling plate at a region where the cooling plate and accommodated matter were ultimately to be in contact, and thus it was not possible to shape a container having the desired shape.

(Example 14)

A container was produced and evaluated in a similar manner to in Example 1 with the exception that the size of accommodated matter was changed such that the accommodation ratio v changed to 100%.

As a result of the accommodation ratio being 100%, ease of operation during loading or unloading of accommodated matter with respect to the container was poor.

(Example 15)

A container having a similar shape to the shape illustrated in FIG. 1 was produced according to the method of Example 1. The results of evaluations are shown in Table 1.

Note that in production, a gap of 30 mm was formed between the cooling plates and the accommodated matter, between the cooling plates and the container, between the heating device and the accommodated matter, and between the heating device and the container. It was found that when an arrangement in which such gaps are provided is adopted, cooling and heating of accommodated matter can no longer be performed effectively.

(Comparative Examples 1 and 2)

A container having a similar shape to the shape illustrated in FIG. 2 was produced through machining of aluminum. The results of evaluations are shown in Table 1.

It was found that in the case of this container, condensation prevention performance is poor due to the high thermal conductivity of aluminum and the efficiency of use of the cooling/heating device for accommodated matter is poor due to heat of the cooling plates dissipating in the container. It was also found that a container made of aluminum has high specific gravity and makes weight reduction difficult. Note that the HDT was not measured because this container was not a resin container.

Table 1

| | Density | Expansion ratio | Flame retardance | Thermal conductivity | Thermal insulation | Accommodation ratio v | Volume Va of air inside container after accommodation | M(40) | M(10) | w | Maximum amount of condensation | Condensation prevention performance | HDT |
|---|---|---|---|---|---|---|---|---|---|---|---|---|---|
| | ($g/cm^3$) | ($cm^3/g$) | - | (W/m·K) | - | (%) | ($cm^3$) | (g) | (g) | - | - | - | (°C) |
| Example 1 | 0.10 | 10 | V-0 | 0.034 | Excellent | 90 | 900 | 0.05 | 0.01 | 1.9 | Excellent | Excellent | 104 |
| Example 2 | 0.10 | 10 | V-0 | 0.034 | Excellent | 95 | 450 | 0.02 | 0.00 | 0.9 | Excellent | Excellent | 104 |
| Example 3 | 0.10 | 10 | V-0 | 0.034 | Excellent | 80 | 1800 | 0.09 | 0.02 | 3.7 | Excellent | Excellent | 104 |
| Example 4 | 0.10 | 10 | V-0 | 0.034 | Excellent | 70 | 2700 | 0.14 | 0.03 | 5.6 | Good | Good | 104 |
| Example 5 | 0.10 | 10 | V-0 | 0.034 | Excellent | 60 | 3600 | 0.18 | 0.03 | 7.5 | Feasible | Feasible | 104 |
| Example 6 | 0.20 | 5.0 | V-0 | 0.041 | Good | 90 | 900 | 0.05 | 0.01 | 1.9 | Excellent | Good | 113 |
| Example 7 | 0.29 | 3.5 | V-0 | 0.043 | Good | 90 | 900 | 0.05 | 0.01 | 1.9 | Excellent | Good | 115 |
| Example 8 | 0.10 | 10 | Non-conforming | 0.034 | Excellent | 90 | 900 | 0.05 | 0.01 | 1.9 | Excellent | Excellent | 125 |
| Example 9 | 0.04 | 23 | Non-conforming | 0.043 | Good | 90 | 900 | 0.05 | 0.01 | 1.9 | Excellent | Good | 92 |
| Example 10 | 0.07 | 15 | Non-conforming | 0.046 | Good | 90 | 900 | 0.05 | 0.01 | 1.9 | Excellent | Good | 38 |
| Example 11 | 0.03 | 30 | Non-conforming | 0.043 | Good | 90 | 900 | 0.05 | 0.01 | 1.9 | Excellent | Good | 34 |
| Example 12 | 0.10 | 10 | Non-conforming | 0.057 | Good | 90 | 900 | 0.05 | 0.01 | 1.9 | Excellent | Good | 42 |
| Example 13 | 1.06 | - | V-0 | 0.140 | Feasible | 90 | 900 | 0.05 | 0.01 | 1.9 | Excellent | Feasible | 112 |
| Example 14 | 0.10 | 10 | V-0 | 0.034 | Excellent | 100 | 0 | 0.00 | 0.00 | 0.0 | Excellent | Excellent | 104 |
| Example 15 | 0.10 | 10 | V-0 | 0.034 | Excellent | 80 | 1800 | 0.09 | 0.02 | 3.7 | Excellent | Excellent | 104 |
| Comparative Example 1 | 2.70 | - | Incombustible | 236 | Poor | 60 | 3600 | 0.18 | 0.03 | 7.5 | Feasible | Poor | - |
| Comparative Example 2 | 2.70 | - | Incombustible | 236 | Poor | 90 | 900 | 0.05 | 0.01 | 1.9 | Excellent | Poor | - |

(continued)

| | Density | Expansion ratio | Flame retardance | Thermal conductivity | Thermal insulation | Accommodation ratio v | Volume Va of air inside container after accommodation | M(40) | M(10) | w | Maximum amount of condensation | Condensation prevention performance | HDT |
|---|---|---|---|---|---|---|---|---|---|---|---|---|---|
| | ($g/cm^3$) | ($cm^3/g$) | - | (W/m·K) | - | (%) | ($cm^3$) | (g) | (g) | - | - | - | (°C) |
| Comparative Example 3 | 0.10 | 10 | V-0 | 0.034 | Excellent | 50 | 4500 | 0.23 | 0.04 | 9.4 | Poor | Poor | 104 |

The following describes evaluation results for the examples and comparative examples.

It can be seen through comparison of Examples 1 to 15 and Comparative Examples 1 to 3 that weight reduction can be achieved and occurrence of condensation can be reduced through a container that is in accordance with the present disclosure.

It can be seen through comparison of Examples 1 to 5 and 14 that condensation prevention performance of the container is excellent when the accommodation ratio v of the container is set as 80% or more but that when the accommodation ratio v of the container is set as 100%, deformation of the container may occur due to thermal expansion of accommodated matter or the like, and ease of operation is poor.

It can be seen through comparison of Examples 1, 6, and 7 that condensation prevention performance of the container is excellent when the density of the foam is 0.1 g/cm$^3$ or less.

It can be seen through comparison of Examples 1 to 7 and 8 that it is not essential to use a flame retardant as a constituent material of the container.

It can be seen through Example 9 that a polystyrene-based resin is also feasible as a base resin.

It can be seen through Examples 10 to 12 that a polyethylene-based resin is also feasible as a base resin.

It can be seen through Example 13 that a non-foam having a polyethylene-based resin as a base resin is also feasible.

It can be seen through Examples 1 and 15 that it is preferable that the cooling plates and the accommodated matter are at least partially in direct contact and that the cooling plates and the container are at least partially in direct contact.

INDUSTRIAL APPLICABILITY

According to the present disclosure, it is possible to provide a container that is for accommodating an electrical component and that has light weight and low likelihood of condensation occurring.

REFERENCE SIGNS LIST

| | |
|---|---|
| 1 | electrical component |
| 2 | cooling device |
| 2pl | cooling plate |
| 2pi | piping |
| 3 | heating device |
| 3pl | heating plate |
| 3pi | piping |
| 4 | busbar |
| 7 | accommodated matter |
| 10 | container |
| 10M | container body |
| 10L | lid |
| 10b | bottom section |
| 10s | side section |
| 20 | accommodation device |
| 30 | electrical component-accommodating body |

**Claims**

1. A thermally insulating container comprising a thermoplastic resin or a thermosetting resin as a constituent material and used for accommodating an electrical component with an accommodation ratio v of 60% or more as expressed by equation (A), shown below,

$$v = (Vf/Ve) \times 100 \qquad (A)$$

where, in equation (A), Ve represents volume of internal space of the container in units of cm$^3$ and Vf represents volume of accommodated matter that includes the electrical component in units of cm$^3$.

**2.** An accommodation device comprising: the container according to claim 1; and either or both of a cooling device contained in the container and a heating device contained in the container.

**3.** The container according to claim 1 or the accommodation device according to claim 2, wherein the constituent material of the container includes a foam that contains the thermosetting resin or the thermoplastic resin.

**4.** The container according to claim 1 or the accommodation device according to claim 2, wherein the foam is formed of foam beads.

**5.** The container according to claim 1 or the accommodation device according to claim 2, wherein the container has a heat deflection temperature of 60°C or higher as measured in accordance with ISO 75-1 and 75-2.

**6.** The container according to claim 1 or the accommodation device according to claim 2, wherein the container has a flame retardance of V-2 or higher as measured by a 20 mm vertical flame test in accordance with a vertical method of UL-94.

**7.** The accommodation device according to claim 2, wherein

the cooling device is directly in contact with the container, and
the heating device is directly in contact with the container.

**8.** An electrical component-accommodating body comprising: the container according to claim 1 or the accommodation device according to claim 2; and the electrical component that is contained in the container.

**9.** An electrical component-accommodating body comprising: the accommodation device according to claim 7; and the electrical component that is contained in the container, wherein

the cooling device is directly in contact with the electrical component and the container, and
the heating device is directly in contact with the electrical component and the container.

**10.** The electrical component-accommodating body according to claim 8 or 9, wherein a non-covered section of the electrical component is directly in contact with the container.

FIG. 1A

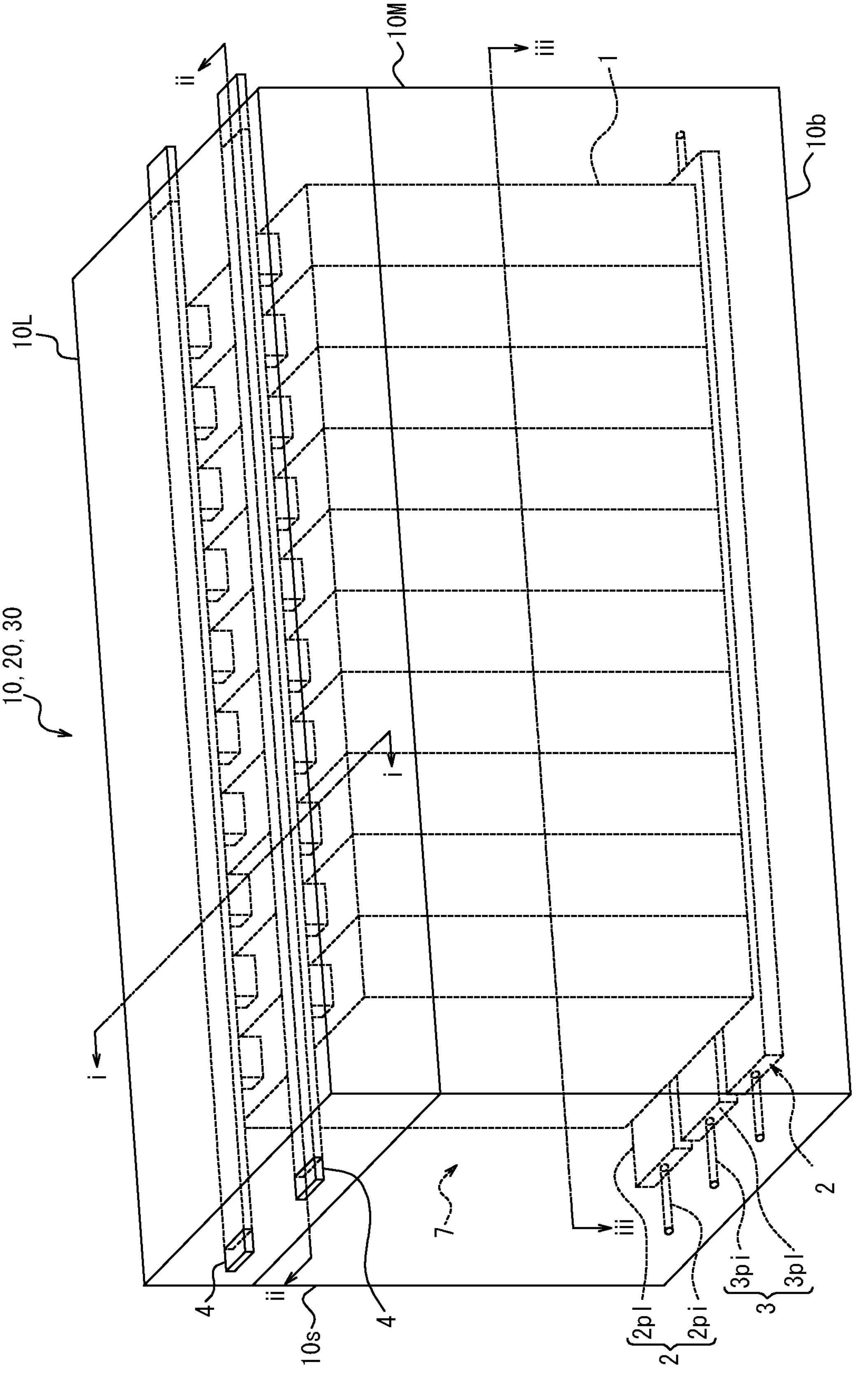

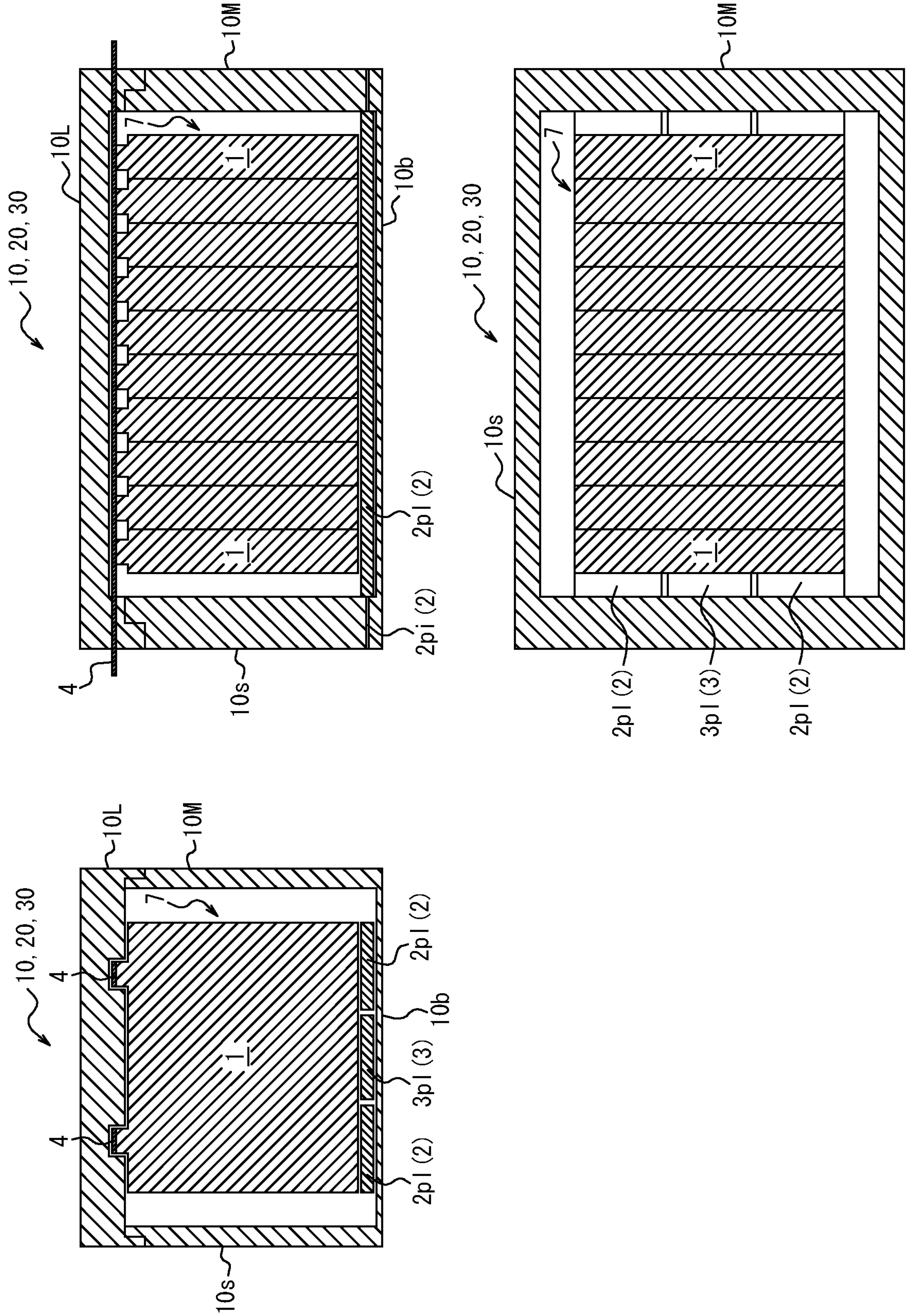


FIG. 1B

FIG. 2A

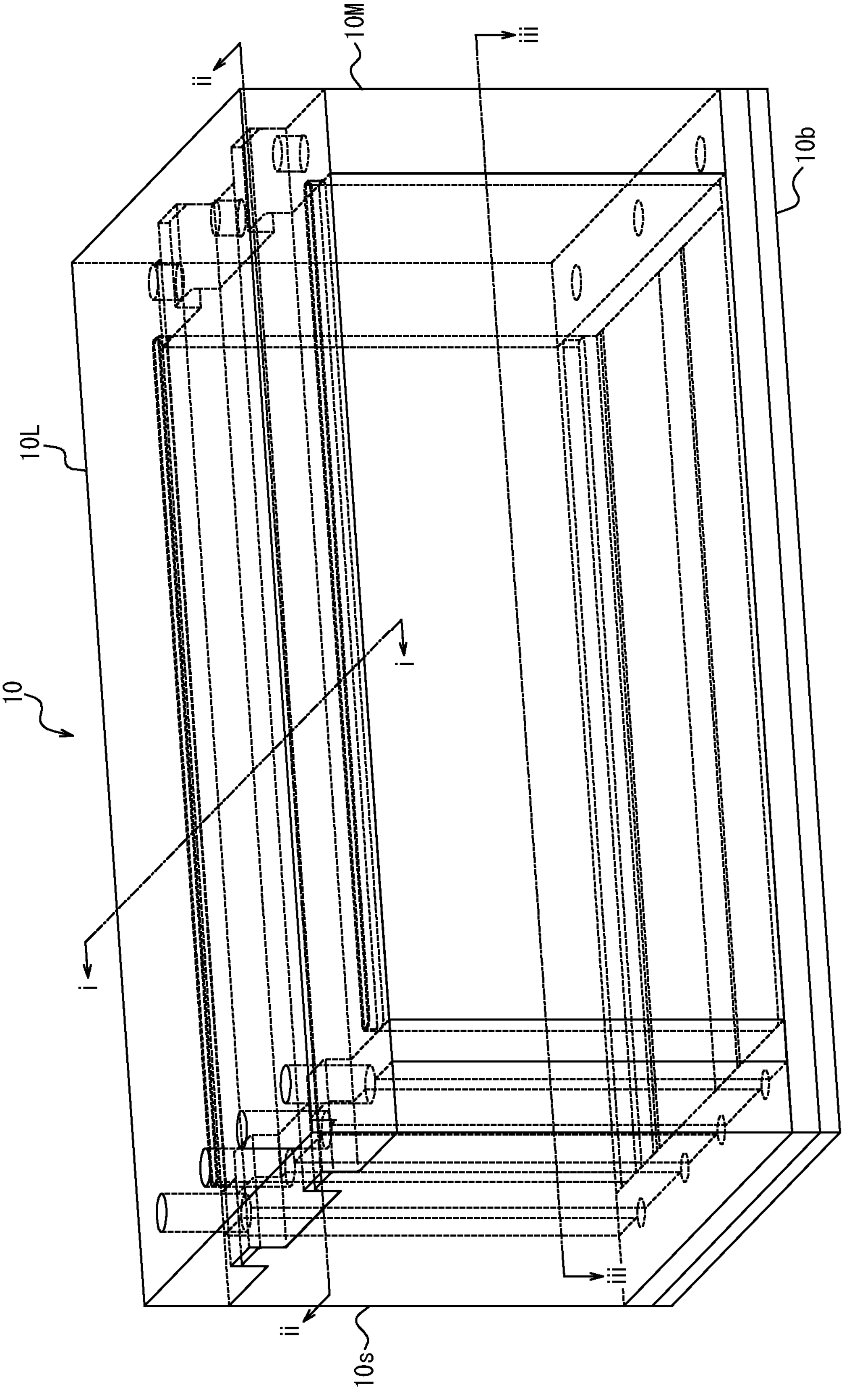

FIG. 2B

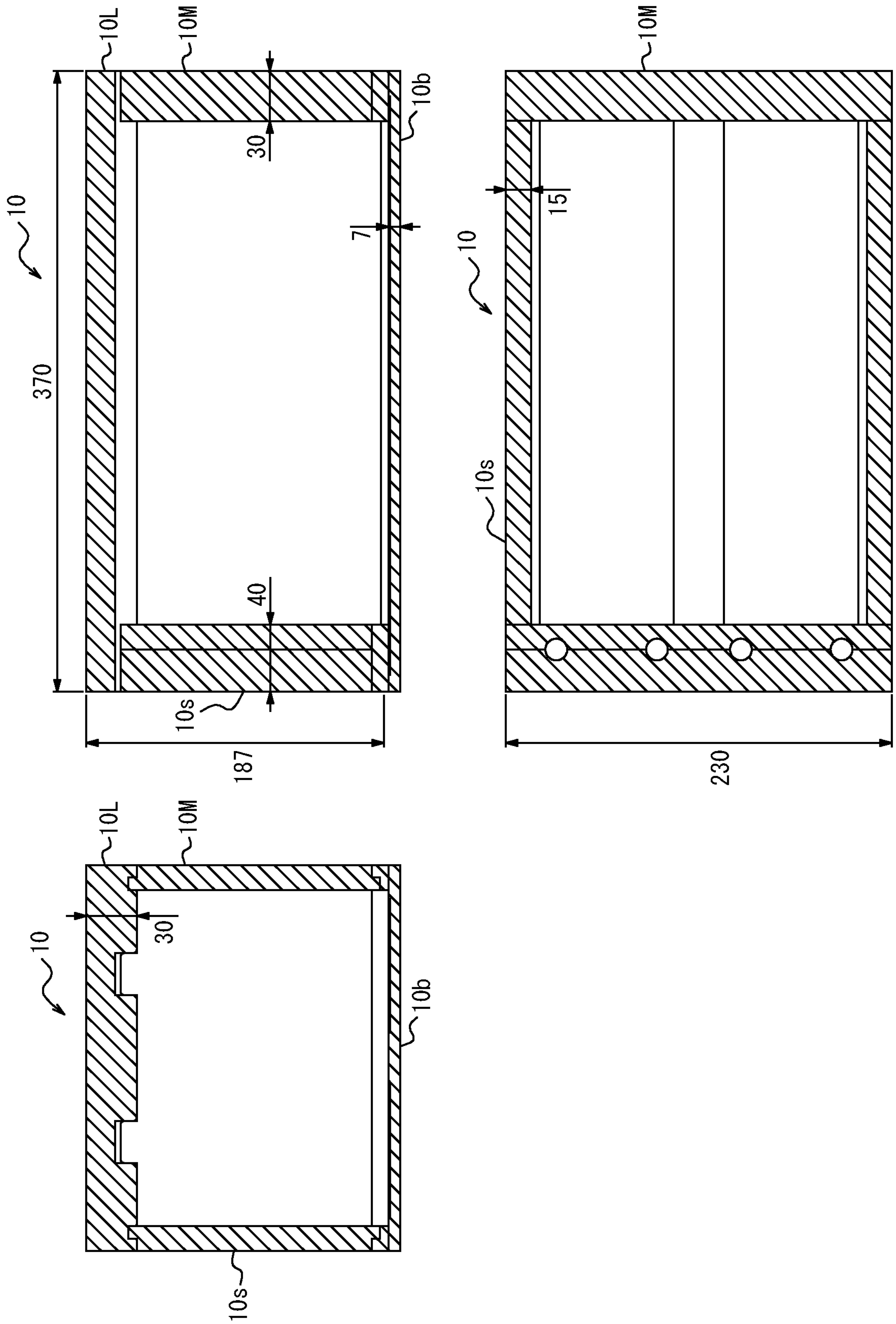
10L
10M
10b
10
370
30
7
40
10s
187
10M
10
15
10s
230
10L
10M
10
30
10b
10s

FIG. 3A

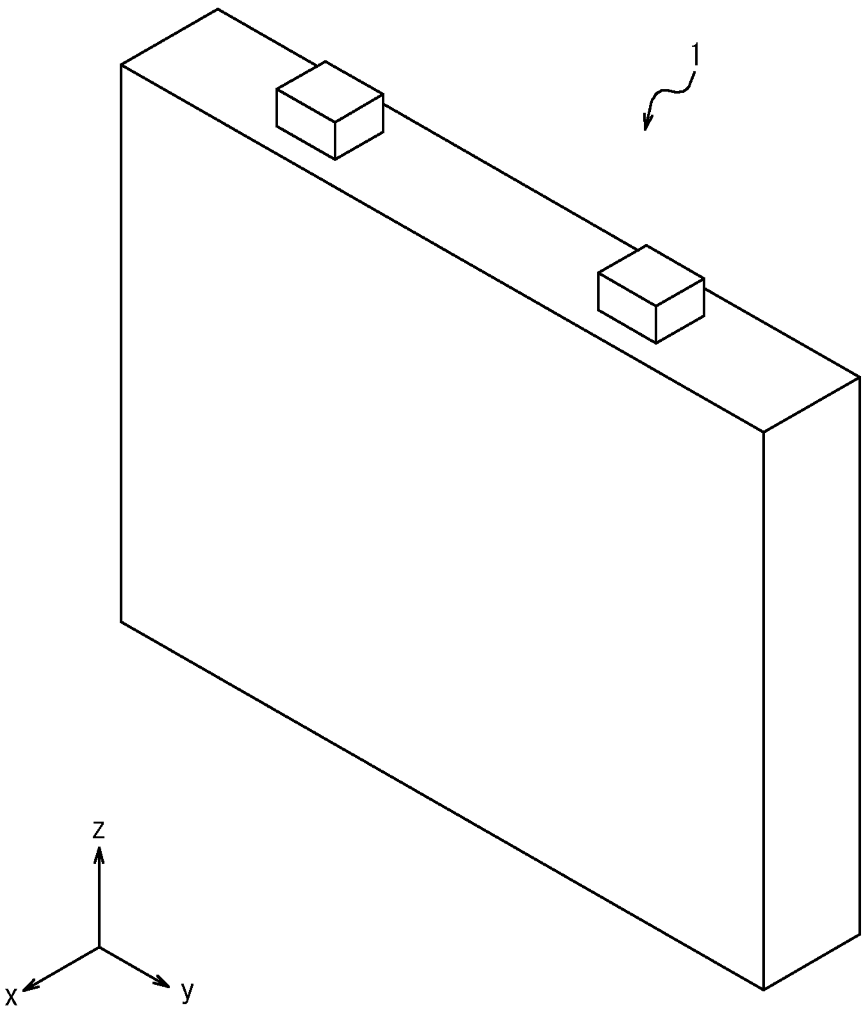

FIG. 3B

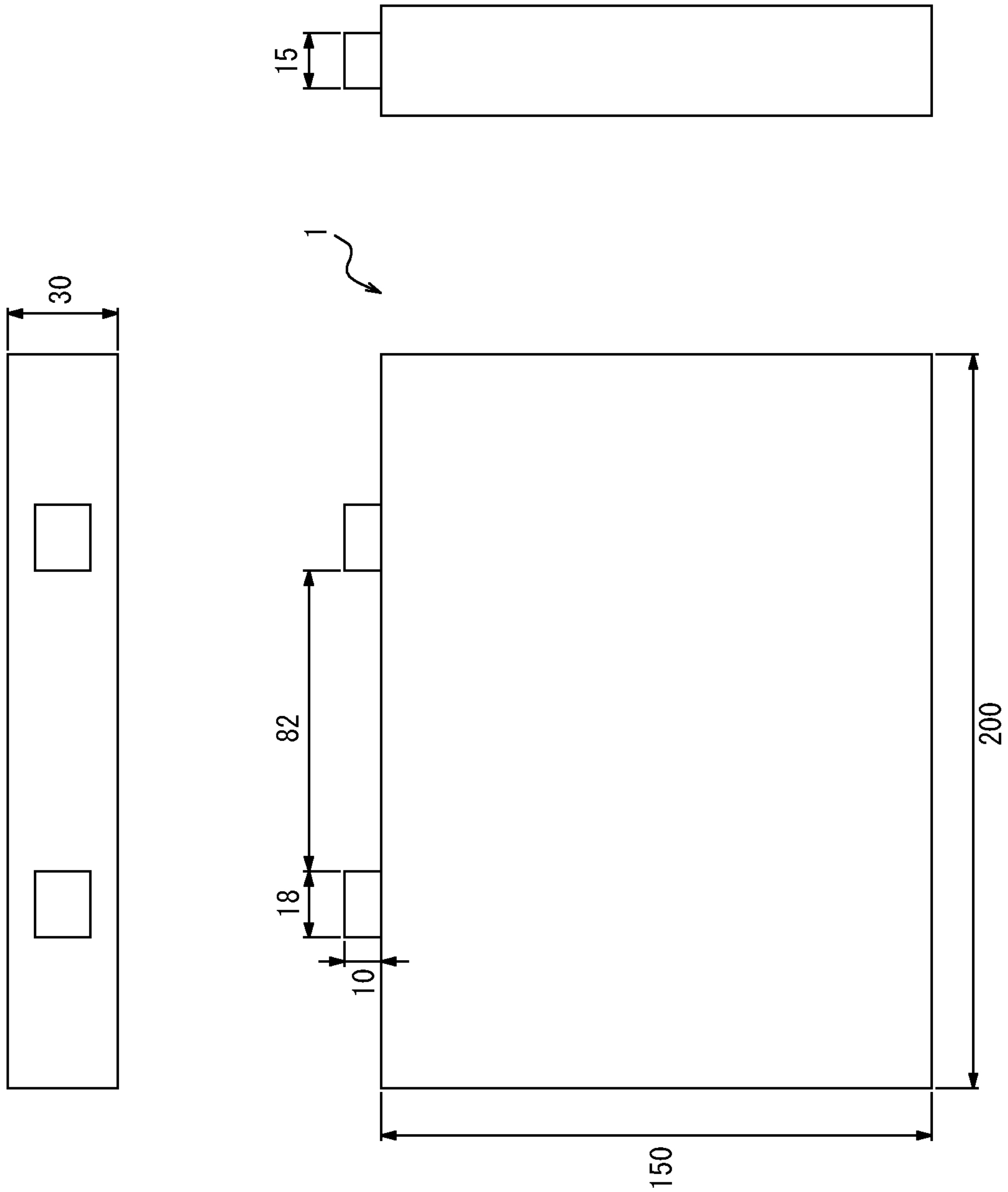

FIG. 4A

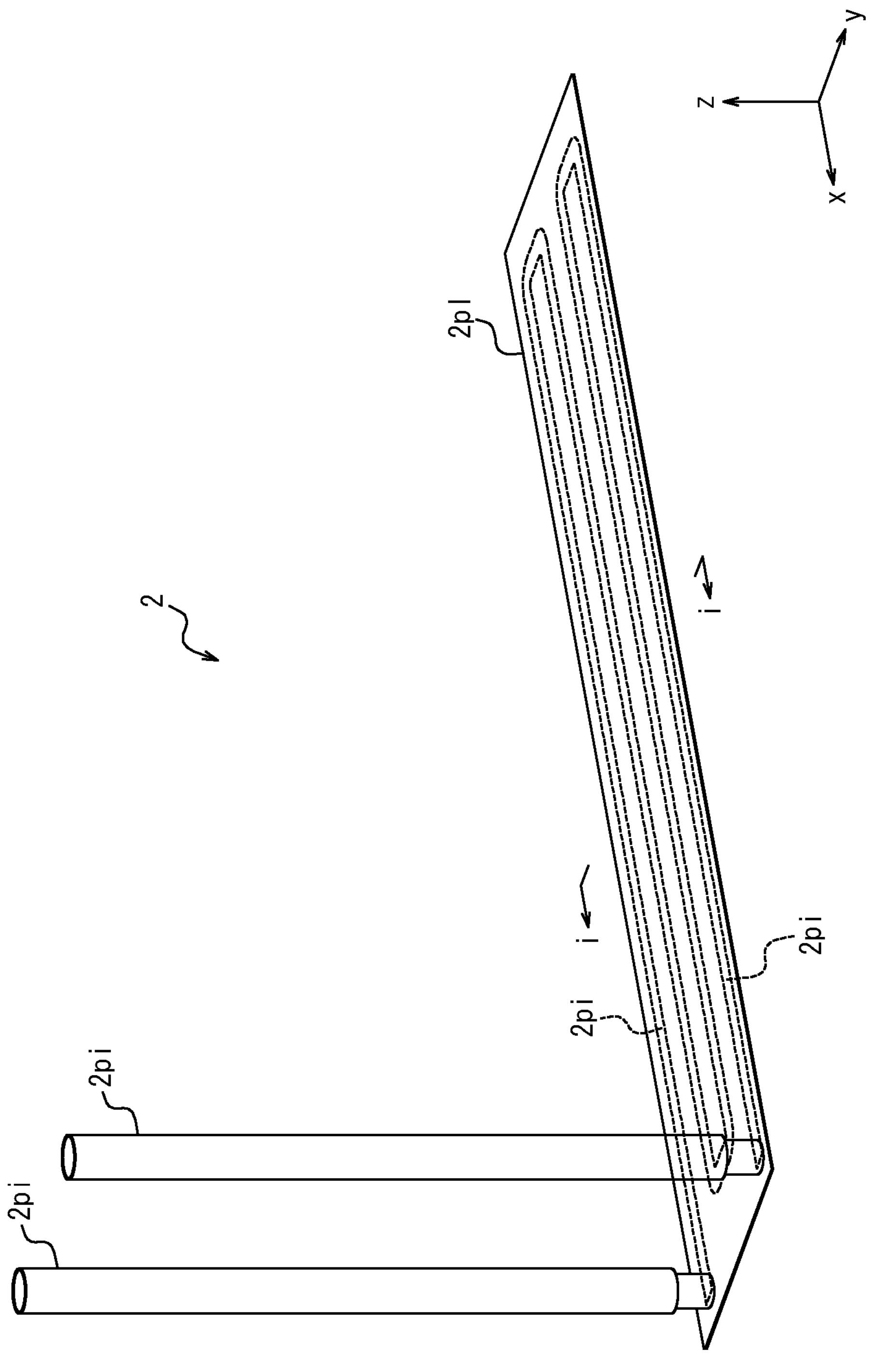

FIG. 4B

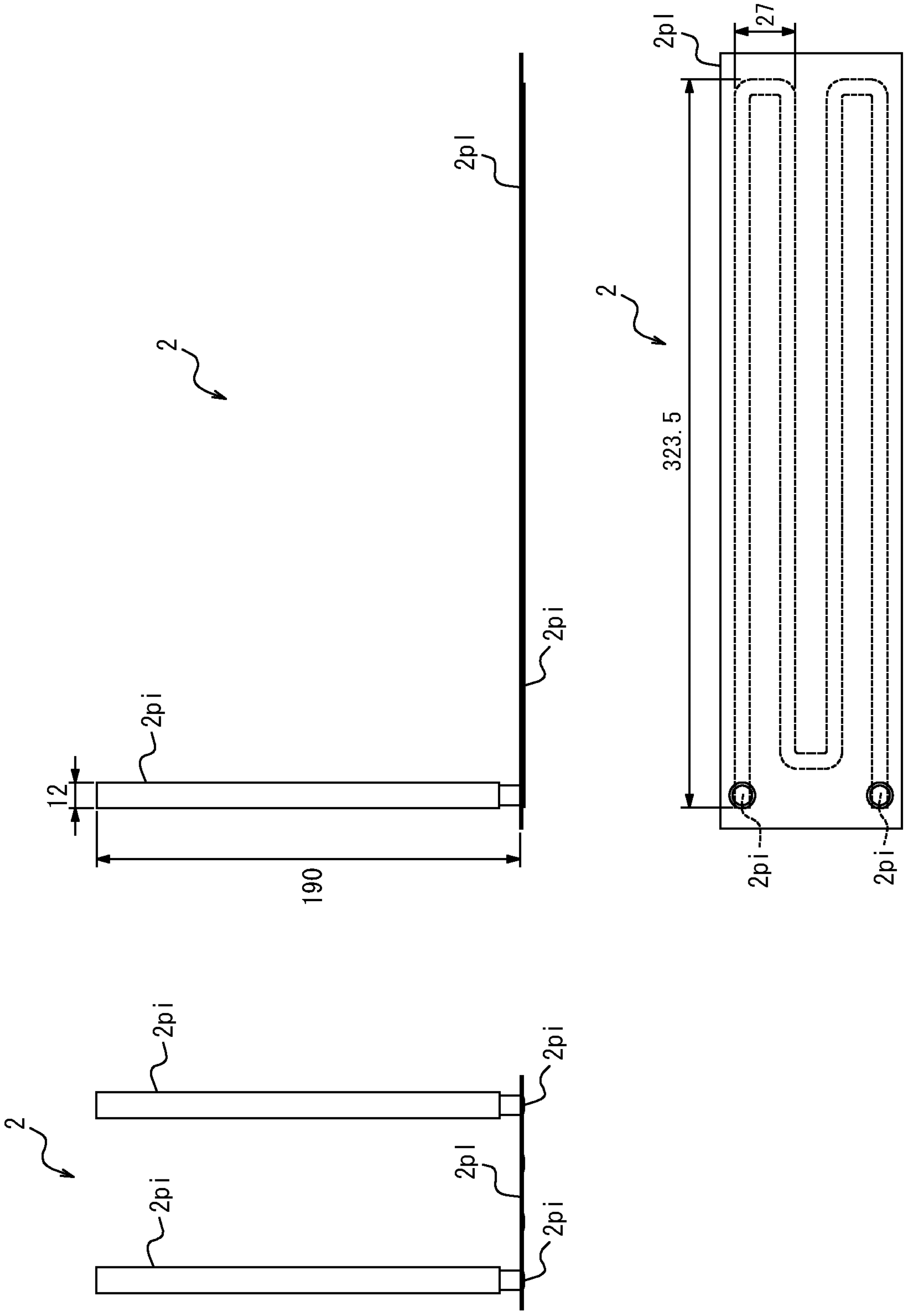

FIG. 5

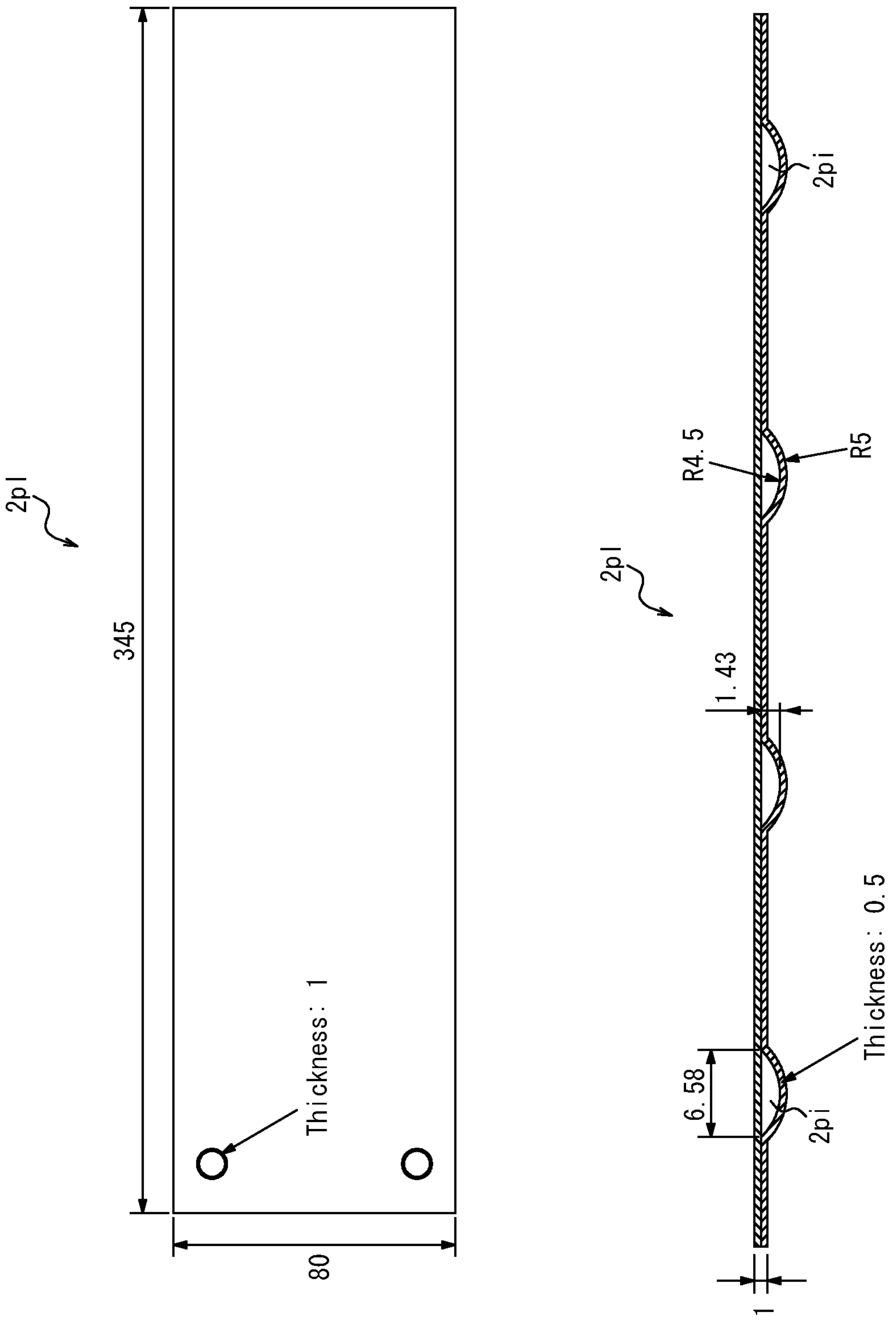
2pl
345
80
Thickness: 1
2pi
R4. 5
R5
2pl
1. 43
Thickness: 0. 5
6. 58
2pi
1

FIG. 6

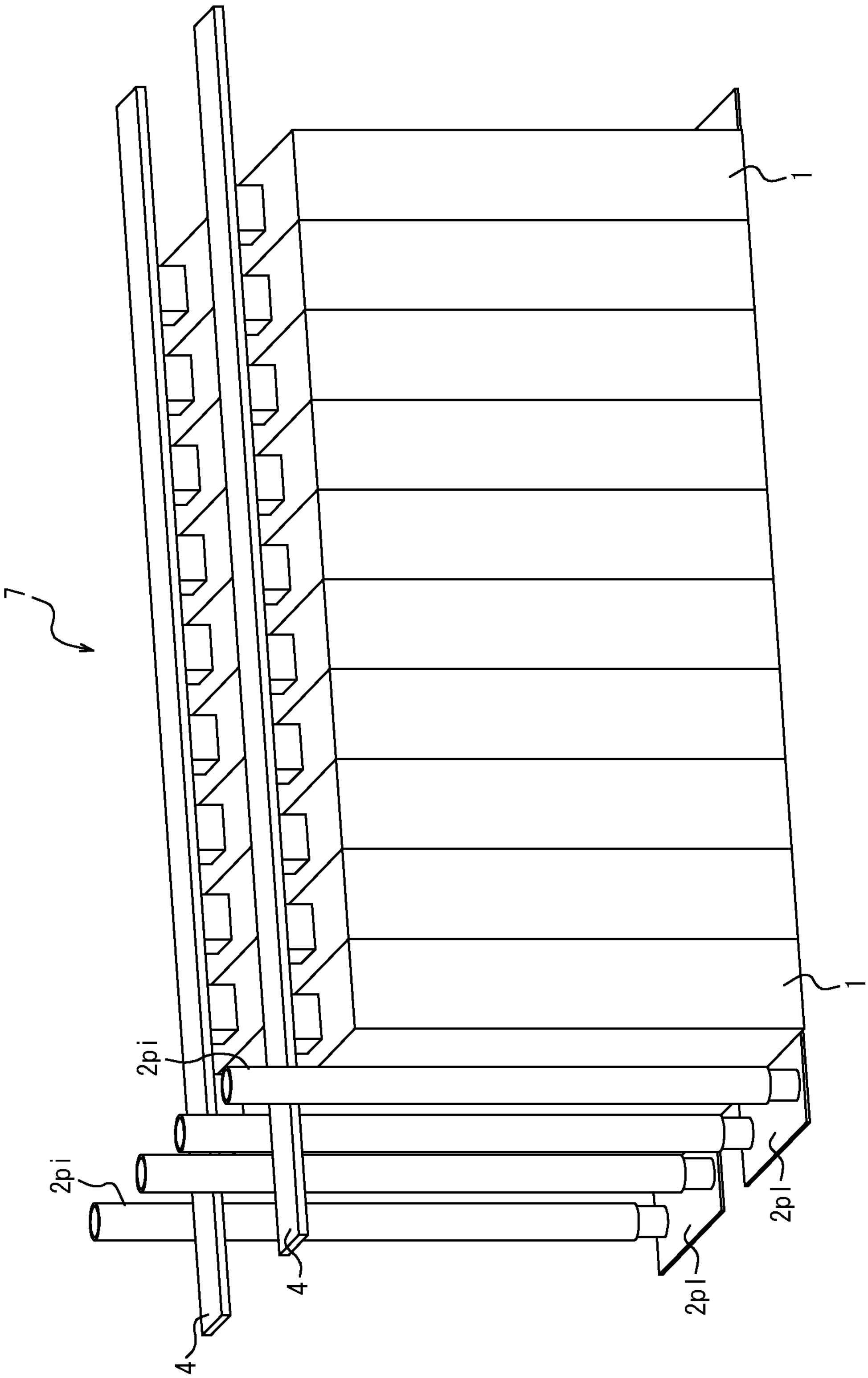

FIG. 7

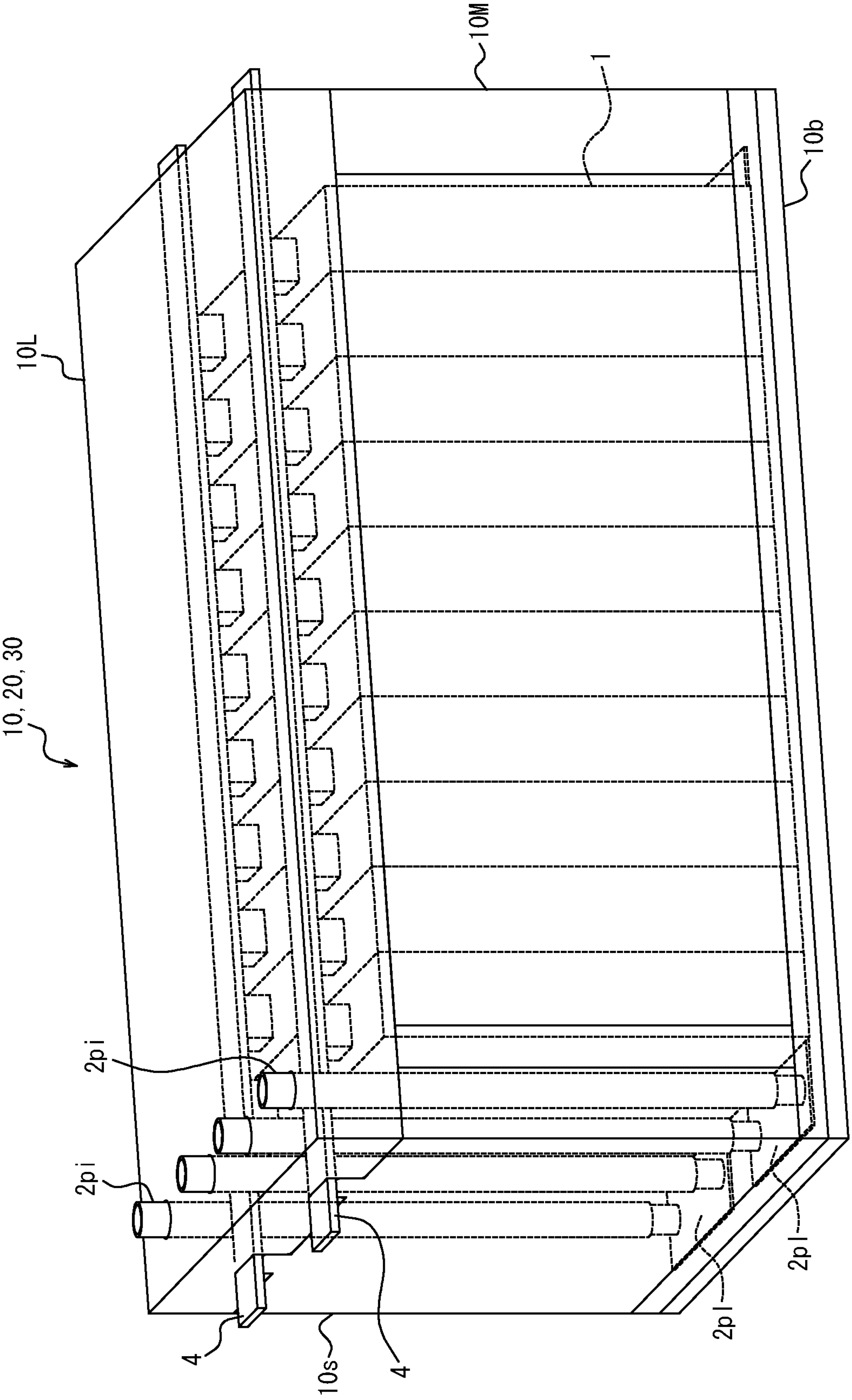

FIG. 8A

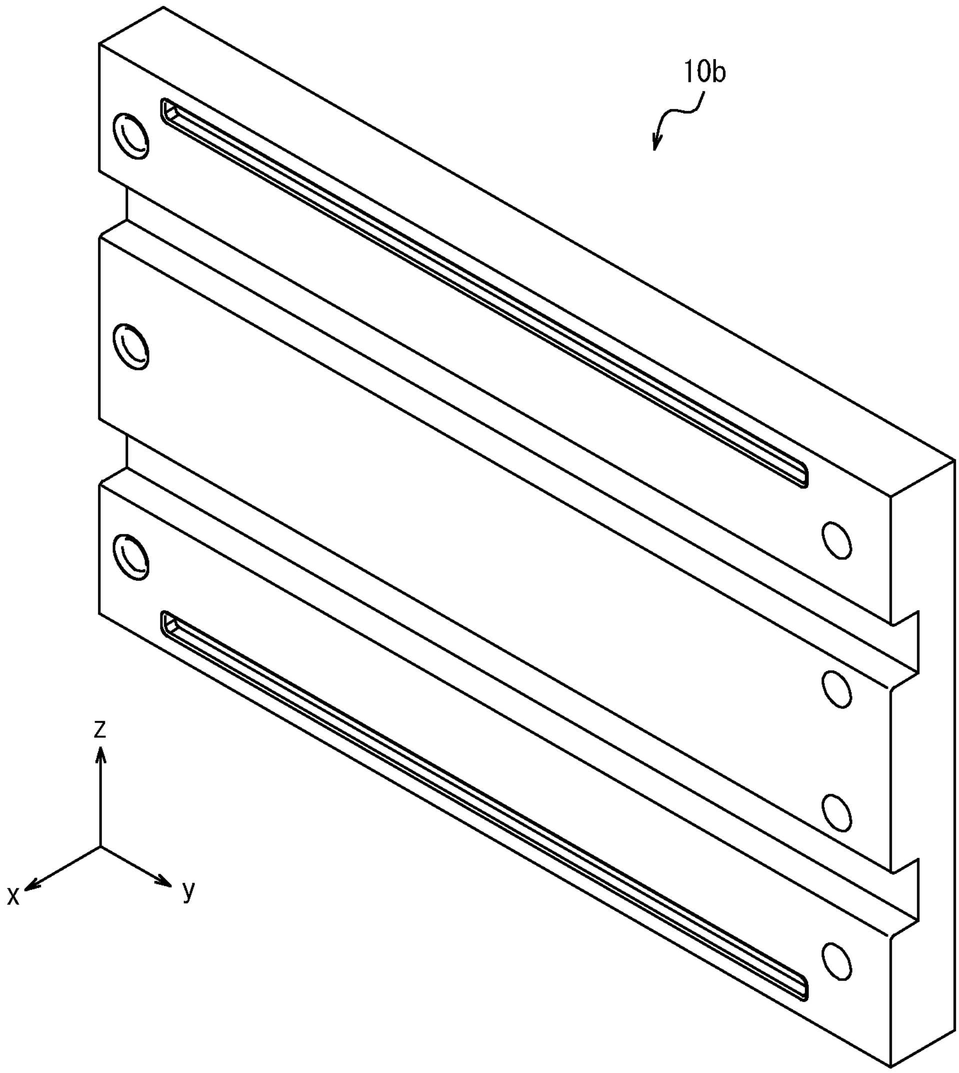

FIG. 8B

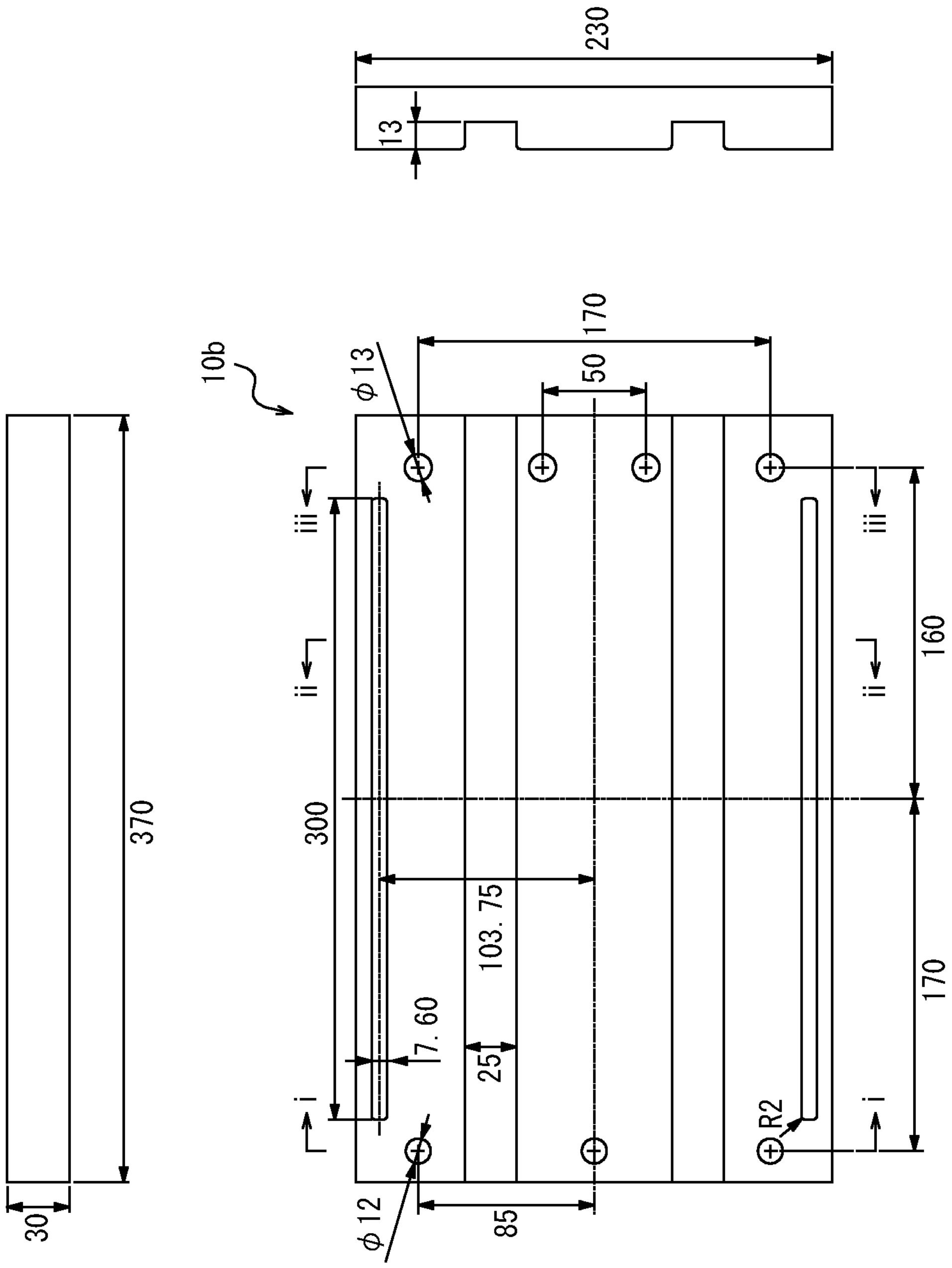
230
13
170
50
10b
φ13
iii
ii
160
300
370
103. 75
7. 60
25
170
i
R2
φ12
85
30

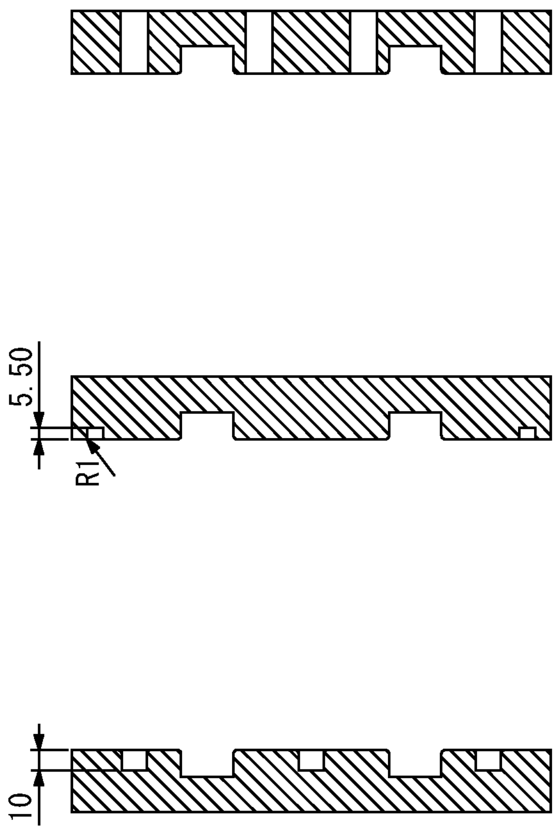


FIG. 8C

FIG. 9A

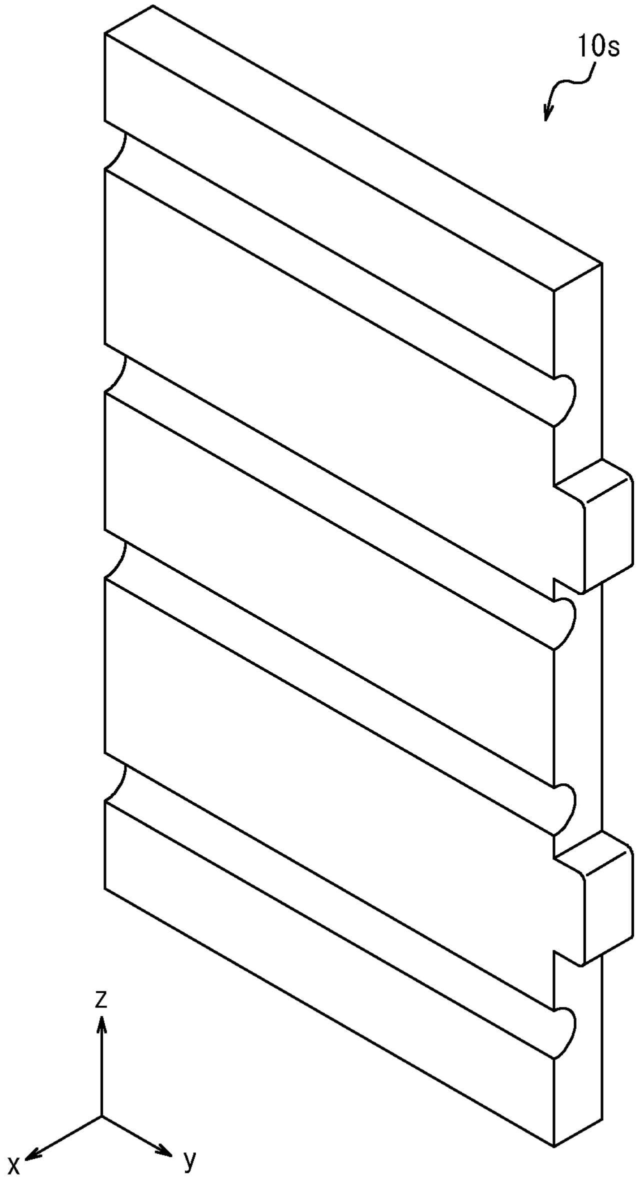

FIG. 9B

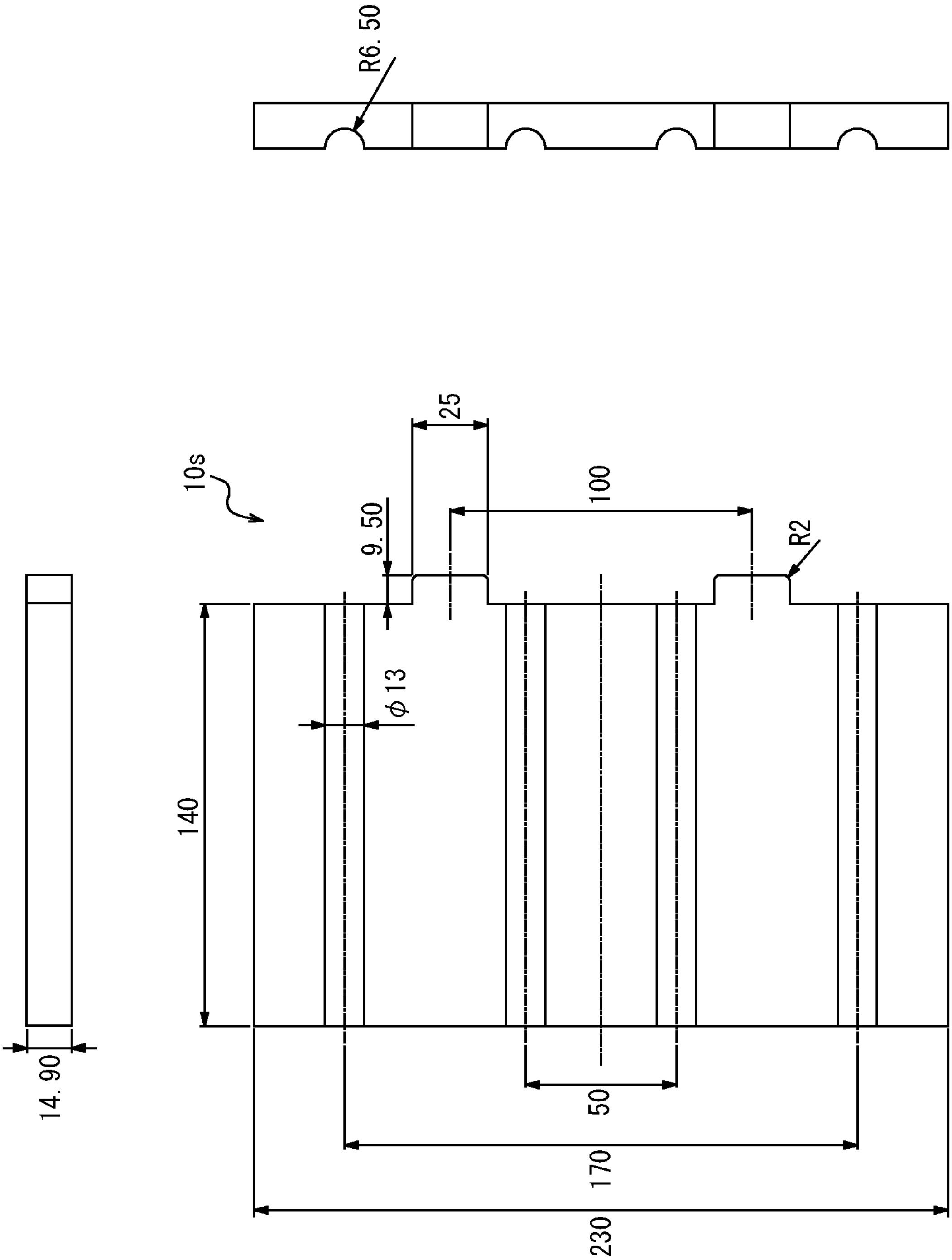

FIG. 10A

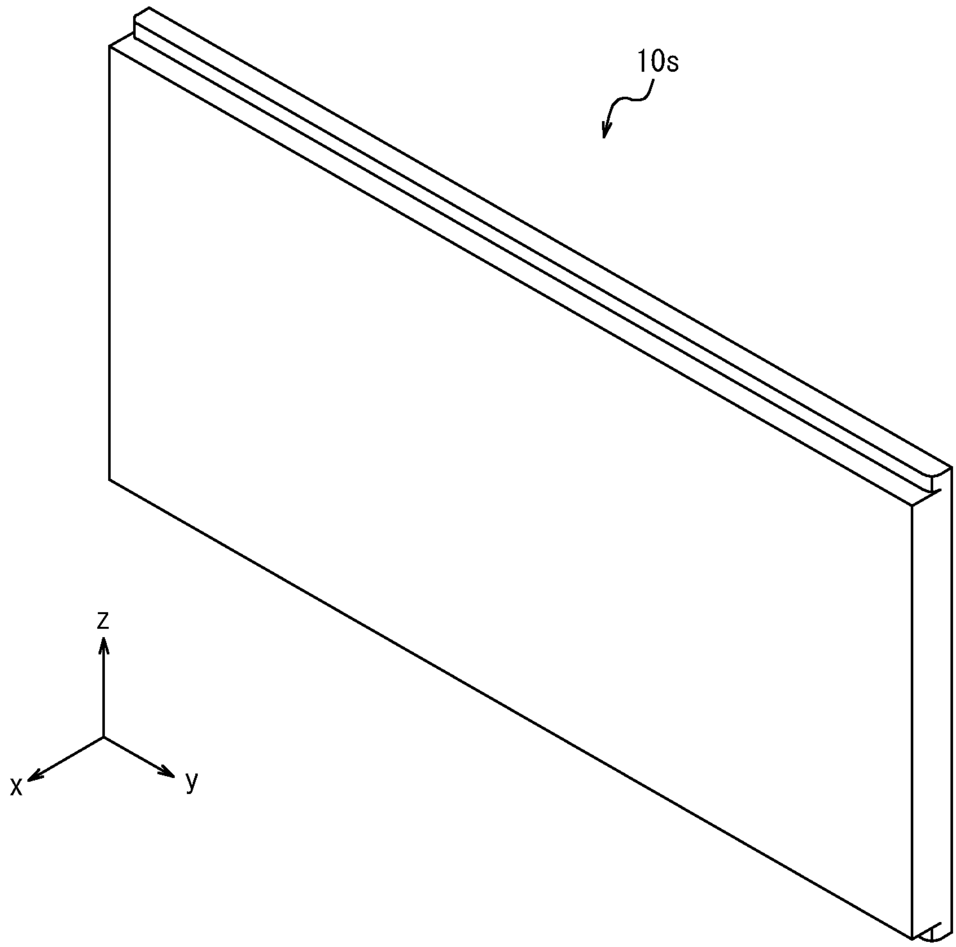

FIG. 10B

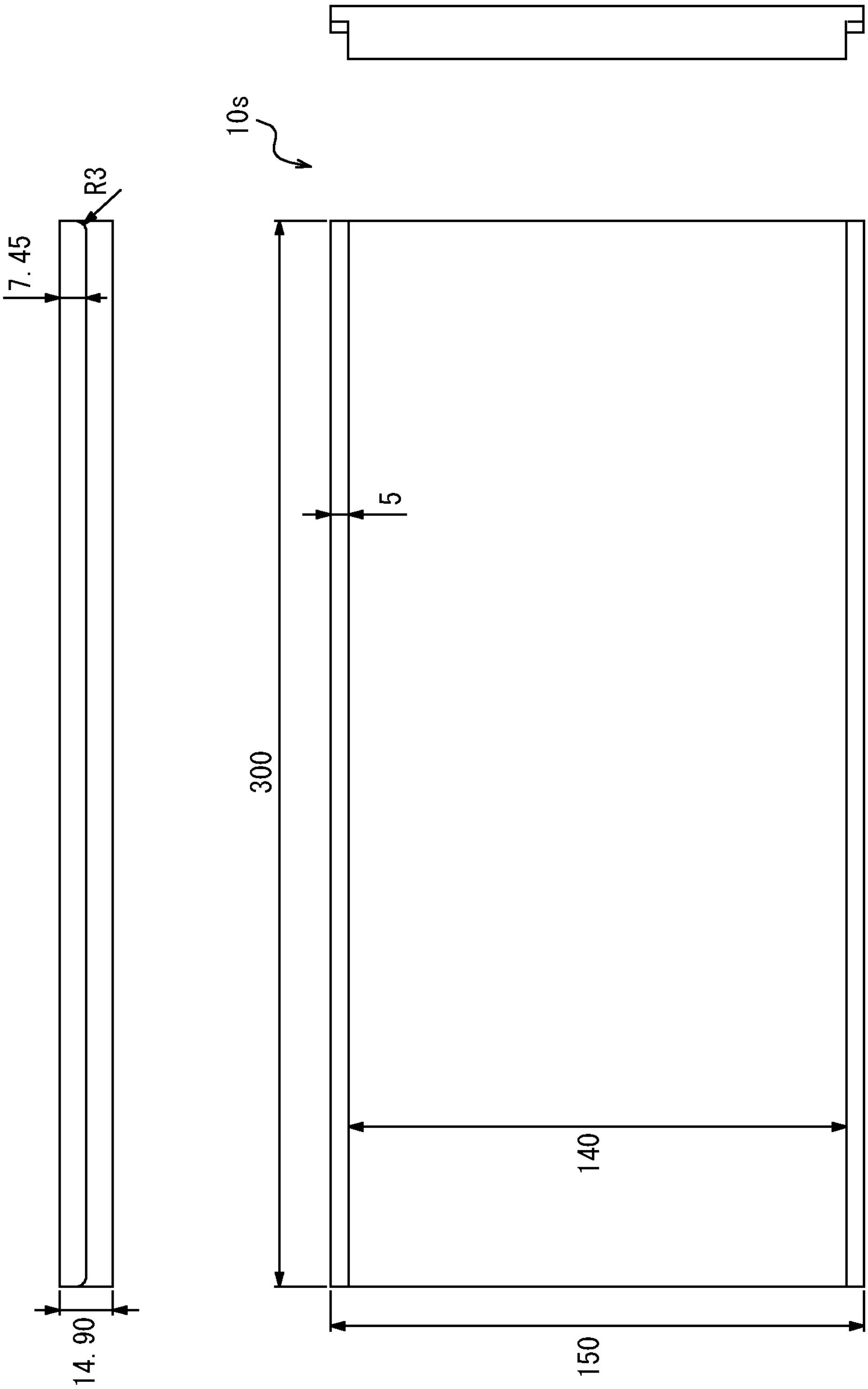

FIG. 11A

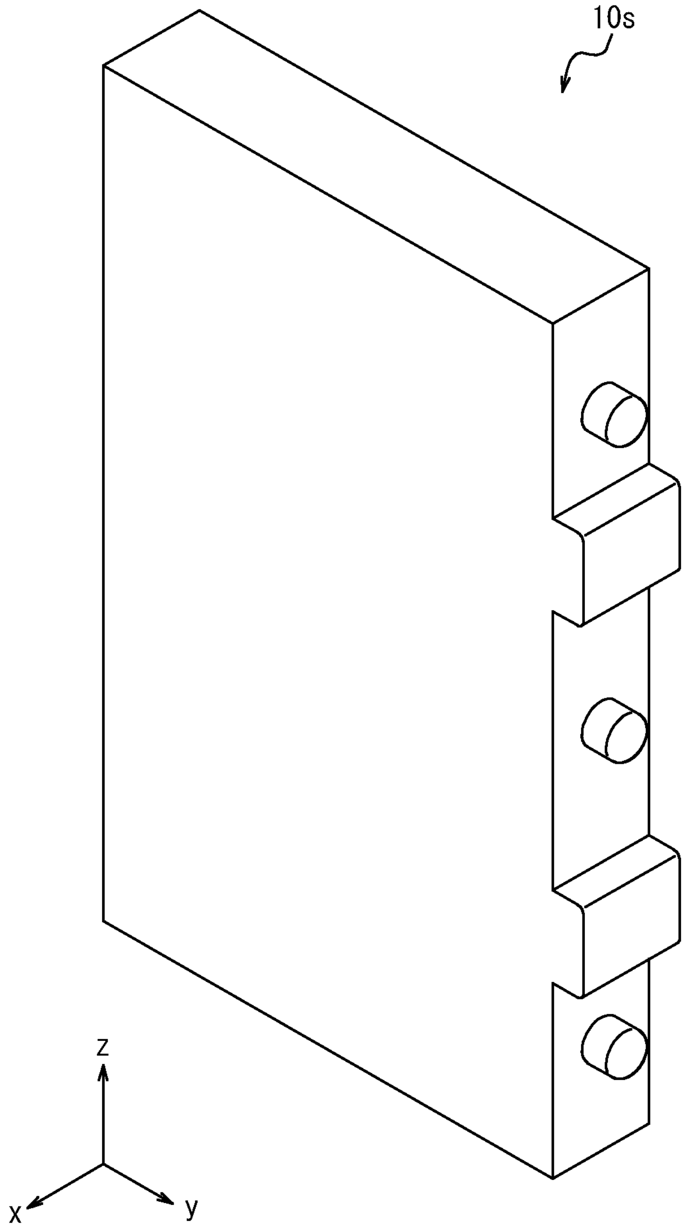

FIG. 11B

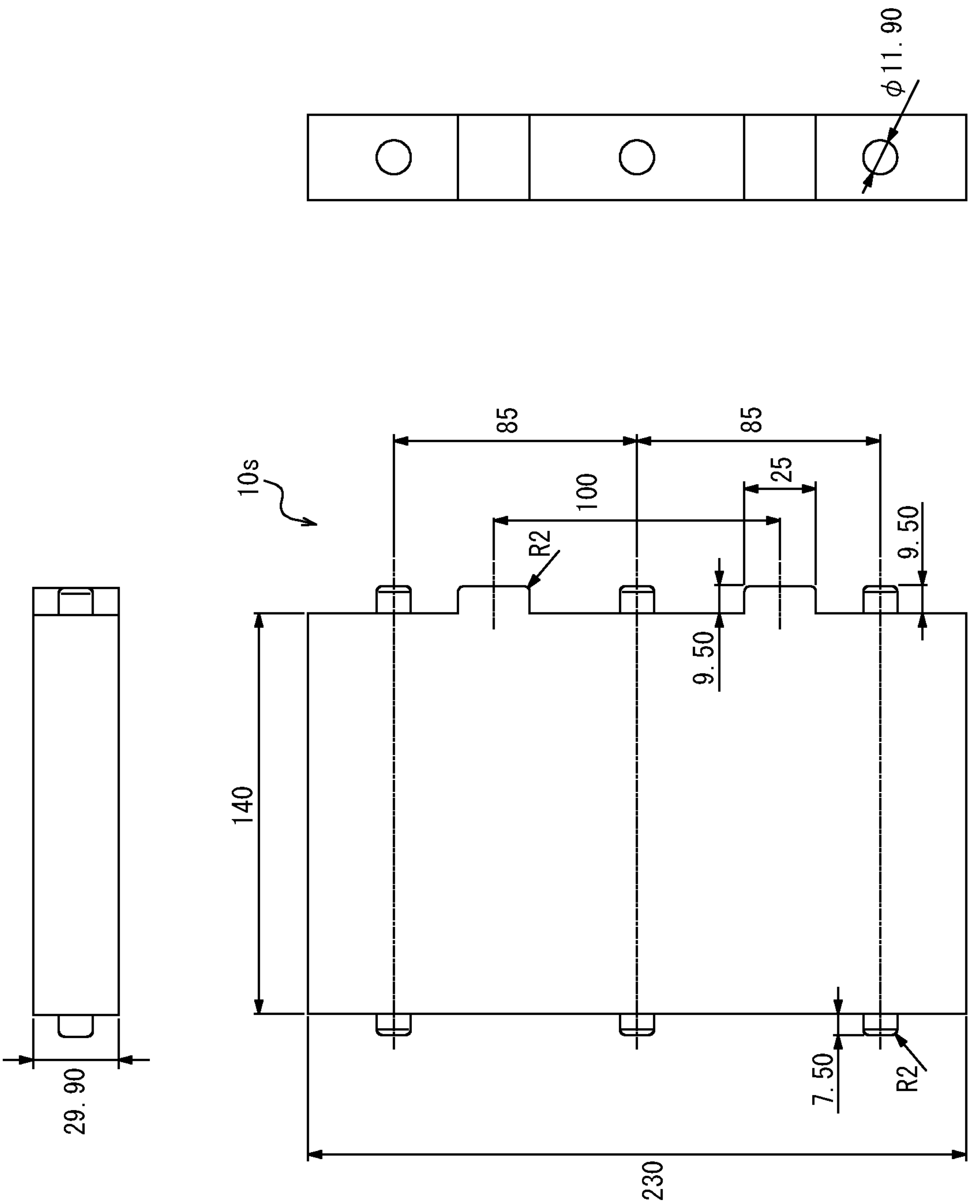

FIG. 12A

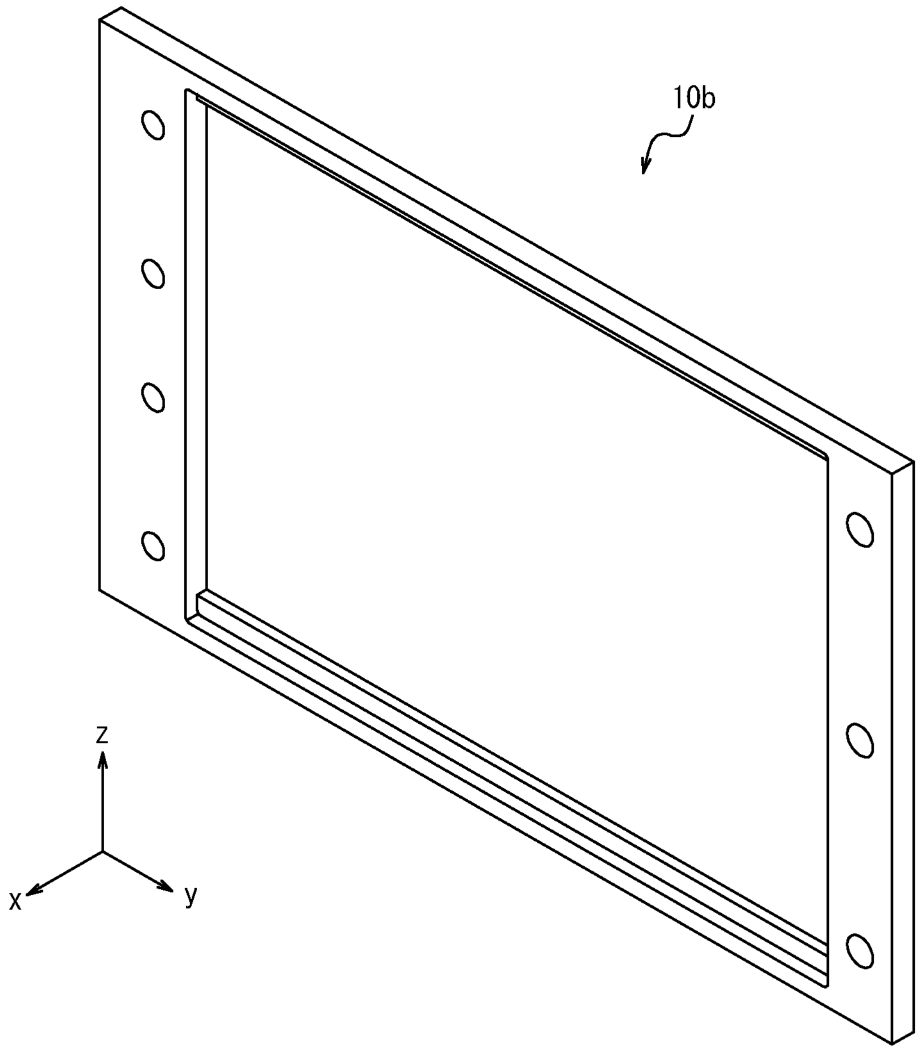

FIG. 12B

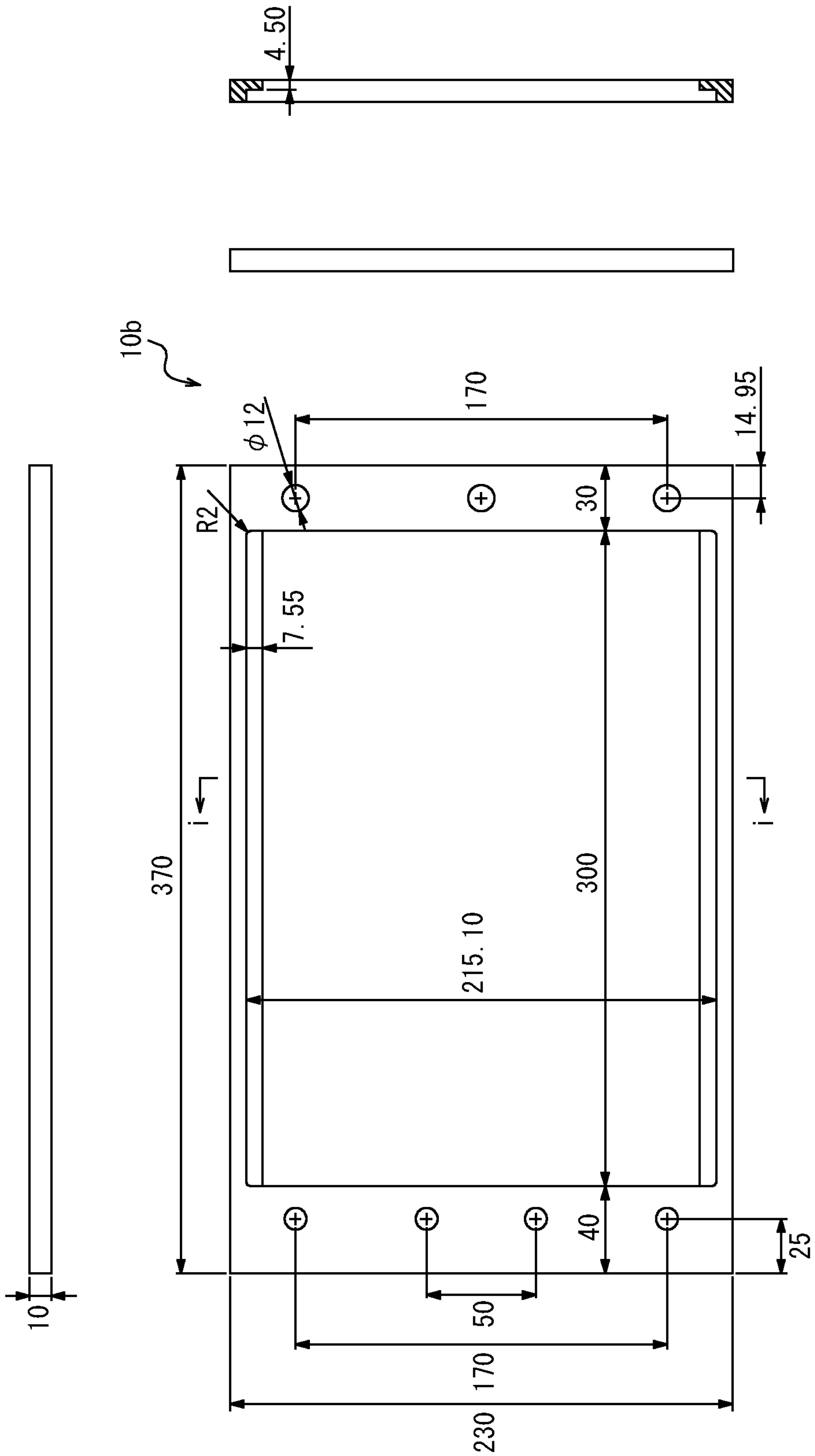
4.50
10b
170
φ12
14.95
30
R2
7.55
i
i
370
300
215.10
40
25
10
50
170
230

FIG. 13A

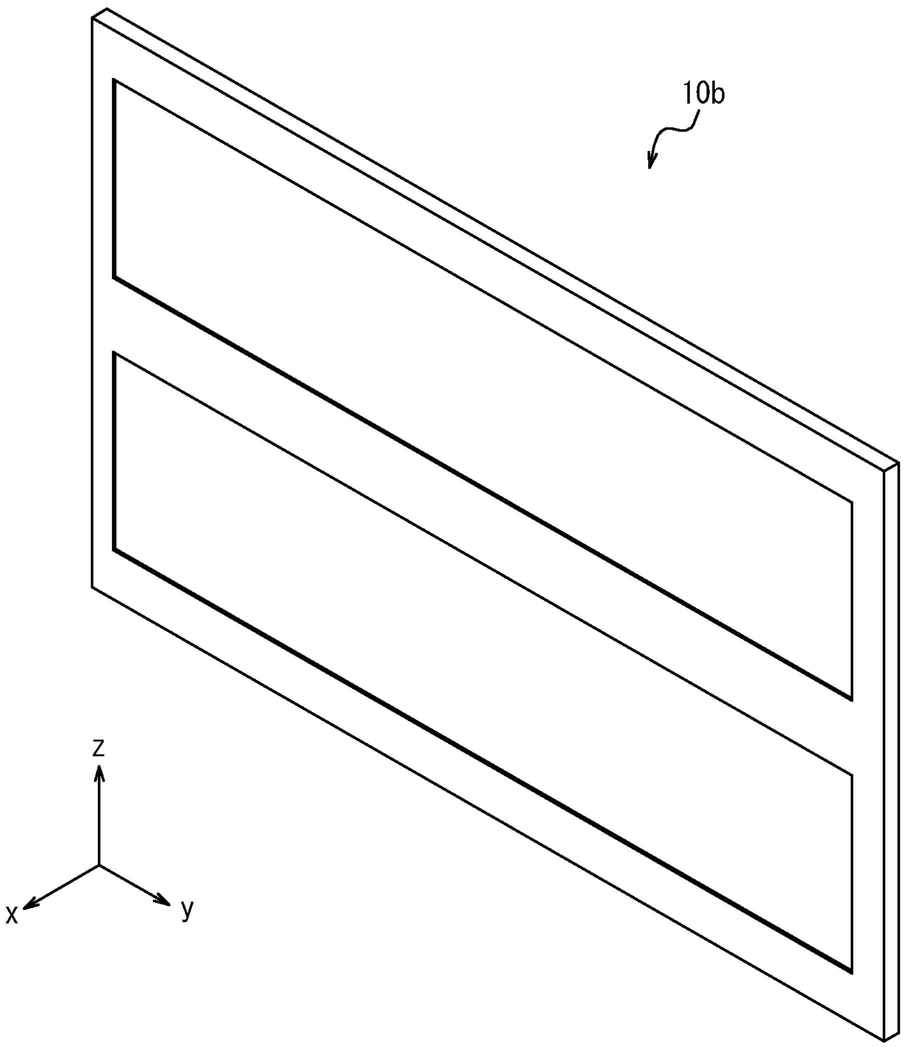

FIG. 13B

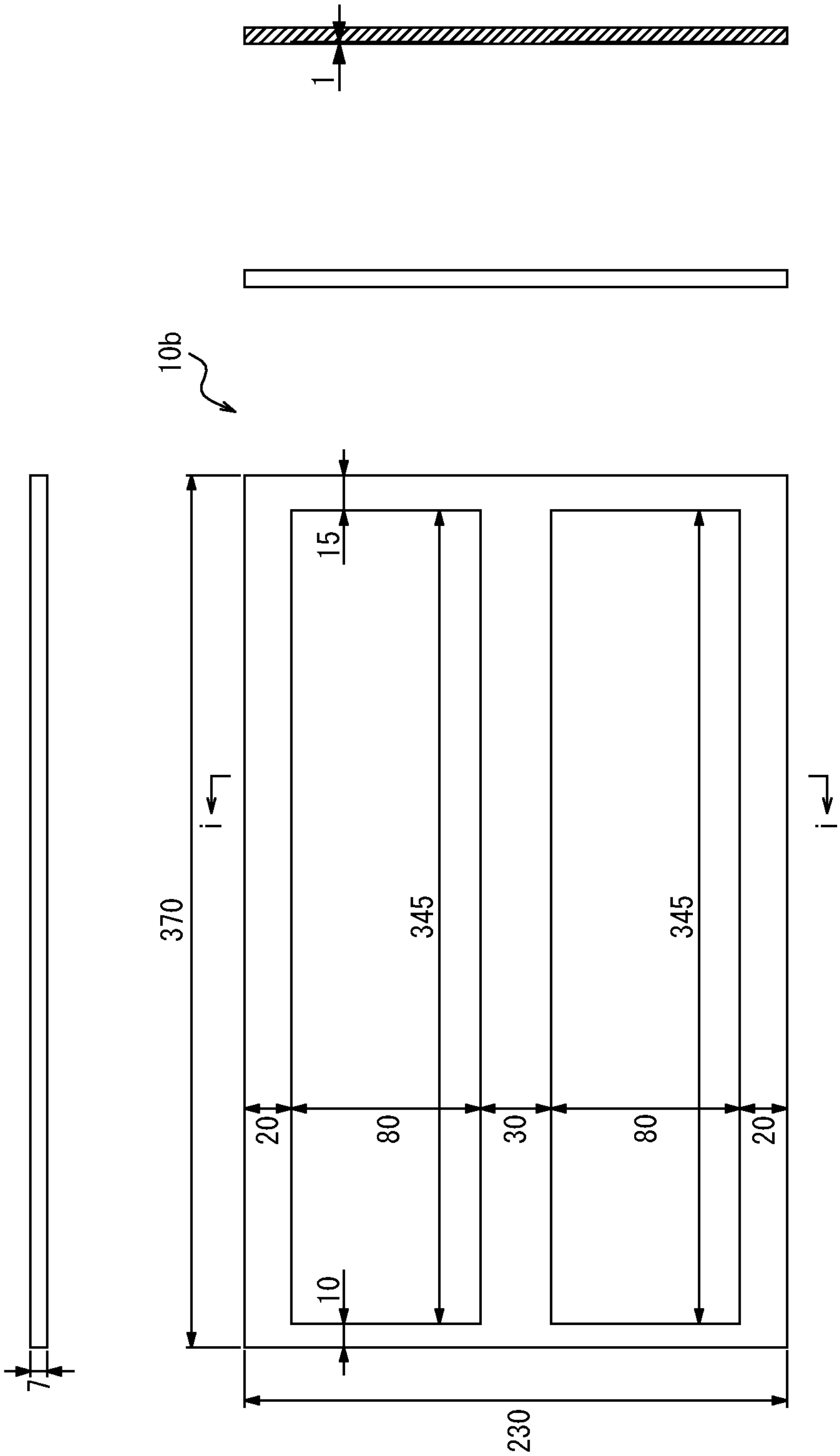

FIG. 14

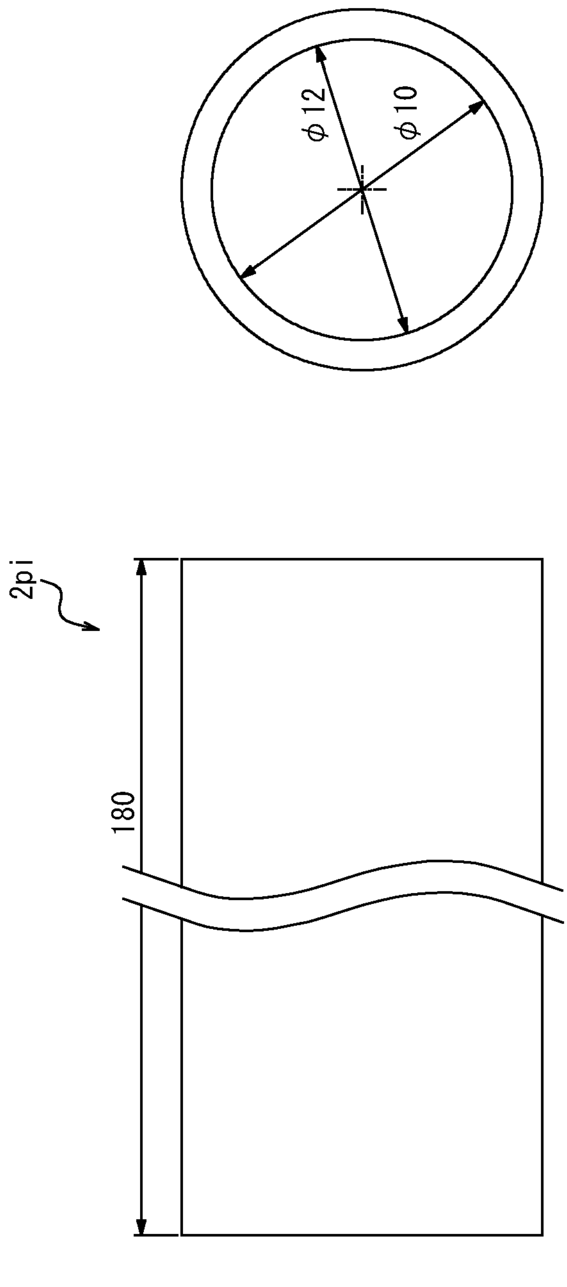

FIG. 15

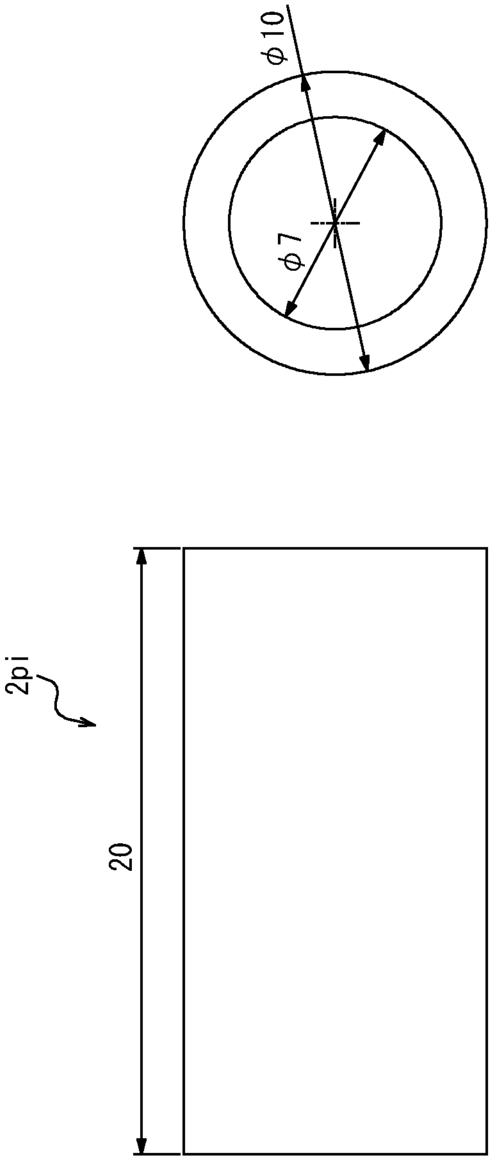

FIG. 16

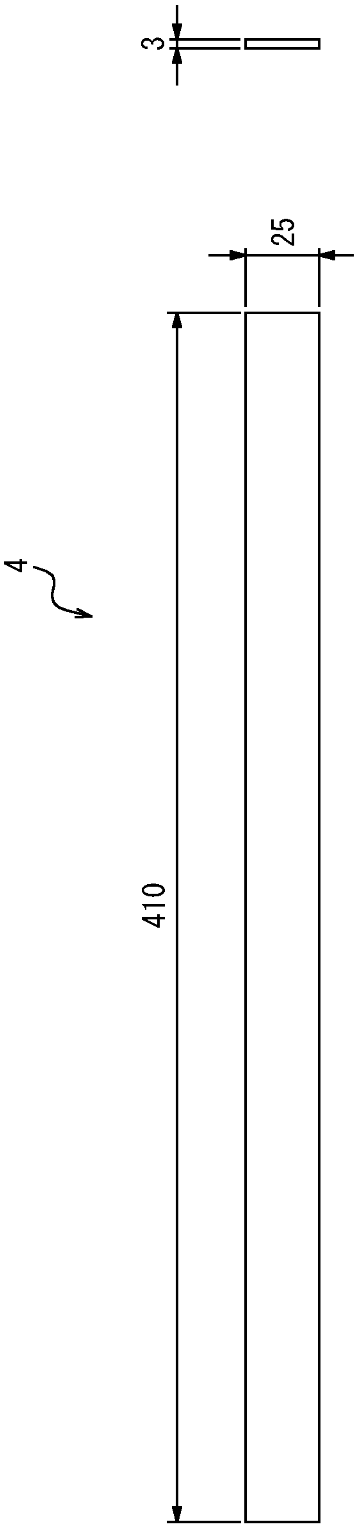

## INTERNATIONAL SEARCH REPORT

International application No.
PCT/JP2020/033498

A. CLASSIFICATION OF SUBJECT MATTER
B65D 85/88(2006.01)i; B65D 81/38(2006.01)i; B65D 85/86(2006.01)i; C08J 9/18(2006.01)i
FI: B65D85/88; B65D81/38 B; B65D85/86 100; C08J9/18 CEZ
According to International Patent Classification (IPC) or to both national classification and IPC

B. FIELDS SEARCHED

Minimum documentation searched (classification system followed by classification symbols)
B65D85/88; B65D81/38; B65D85/86; C08J9/18

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2014-84168 A (ASAHI KASEI CHEMICALS CORP.) 12 May 2014 (2014-05-12) paragraphs [0002], [0011]-[0042], [0045], [0049]-[0061], [0067], fig. 1-3 | 1, 3-6<br>2, 7-10 |
| Y | JP 2019-160442 A (HONDA MOTOR CO., LTD.) 19 September 2019 (2019-09-19) paragraphs [0001]-[0003], [0008], [0024]-[0041], fig. 1-2 | 2, 7-10 |
| A | WO 2017/126286 A1 (HITACHI AUTOMOTIVE SYSTEMS, LTD.) 27 July 2017 (2017-07-27) | 1-10 |
| A | JP 2003-68264 A (SONY CORP.) 07 March 2003 (2003-03-07) | 1-10 |
| A | JP 2020-87833 A (ASAHI KASEI CORPORATION) 04 June 2020 (2020-06-04) | 1-10 |

☐ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 04 November 2020 (04.11.2020) | 17 November 2020 (17.11.2020) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application No.
PCT/JP2020/033498

| Patent Documents referred in the Report | Publication Date | Patent Family | Publication Date |
|---|---|---|---|
| JP 2014-84168 A | 12 May 2014 | (Family: none) | |
| JP 2019-160442 A | 19 Sep. 2019 | CN 209374628 U | |
| WO 2017/126286 A1 | 27 Jul. 2017 | (Family: none) | |
| JP 2003-68264 A | 07 Mar. 2003 | (Family: none) | |
| JP 2020-87833 A | 04 Jun. 2020 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 6001323 B
- JP 2018174337 A
- JP 2012246792 A
- JP H4372630 A
- JP 2006077218 A